# EUROPÄISCHE PATENTSCHRIFT

(11) **EP 0 446 912 B1**
(45) Veröffentlichungstag und Bekanntmachung des Hinweises auf die Patenterteilung: **12.07.1995**
(21) Anmeldenummer: 91103918.8
(22) Anmeldetag: 14.03.1991
(51) Int. Cl.: C07F 7/12, C08G 77/04, C09K 19/40

(54) **Organosilsesquioxane mit mindestens einer mesogenen Seitengruppe**
Organosilsesquioxanes with at least one mesogenic side group
Organosilsesquioxanes avec au moins une groupe latérale mesogène

(30) Priorität: 14.03.1990 DE 4008076
(43) Veröffentlichungstag der Anmeldung: 18.09.1991
(73) Patentinhaber: Consortium für elektrochemische Industrie GmbH, D-81379 München (DE)
(72) Erfinder: Spes, Peter, Dr., W-8000 München 81 (DE); Kreuzer, Franz-Heinrich, Dr., W-8033 Martinsried (DE); Freyer, Christian, Dr., W-8263 Burghausen (DE); Hessling, Mechthild, W-8011 Kirchheim (DE)

(56) Entgegenhaltungen:
- EP-A- 0 029 162
- EP-A- 0 066 137
- EP-A- 0 163 495
- EP-A- 0 291 884
- EP-A- 0 354 753

## Beschreibung

Die Erfindung betrifft Organosilsesquioxane mit mindestens einer mesogenen Seitengruppe, verfahren zu ihrer Herstellung sowie ihre Verwendung.

Lineare, mit mesogenen Gruppen modifizierte Organopolysiloxane sind bereits bekannt. Hierzu sei beispielsweise auf H. Finkelmann, G. Rehage, Makromol. Chem., Rapid Commun., 1, 733 (1980), H. Ringsdorf, A. Schneller, Makromol. Chem., Rapid Commun., 3, 557 (1982), G.W. Gray, D. Lacey, G. Nestor, M.S. White, Makromol. Chem., Rapid Commun., 7, 71 (1986), H.J. Coles, R. Simon, Mol. Cryst. Liq. Cryst., 102, 75 (1984), R.M. Richardson, N.J. Herring, Mol. Cryst. Liq. Cryst., 123, 143 (1985), H. Richard, H. Mauzac, H.T. Nguyen, G. Sigaud, M.F. Achard, F. Harduin, H. Gasparoux, Mol. Cryst. Liq. Cryst., 155, 141 (1988), H. Sackmann, H. Schubert, Z. Chem., 26, 66 (1986), V.P. Shibaev, N.A. Plate, Advances in polymer Sciences, Springer Verlag, 60-61, 173 (1984), H. Zaschke, M. Krücke, M. Schlossarek, Acta Polymerica, 39, 607 (1988) und UP-PS 4,358,391 (H. Finkelmann, Wacker-Chemie GmbH; ausgegeben am 9. November 1982) verwiesen.

Bei diesen organopolysiloxanen bereitet die Überführung in den flüssigkristallinen, orientierten Zustand oftmals insoweit Schwierigkeiten, als zum Erreichen eines hohen Ordnungsgrades längere Temperzeiten in Kauf zu nehmen sind. Kürzerkettige Spezies der obengenannten Art orientieren sich zwar spontan, weisen jedoch zumeist unerwünschte klebrige Eigenschaften auf.

Ferner werden in US-PS 4,410,570 (F.-H. Kreuzer, Consortium für elektrochemische Industrie GmbH; ausgegeben am 18. Oktober 1983) cyclische Organopolysiloxane mit mindestens einer mesogenen Gruppe sowie in EP-OS 163 495 (T.Imai, Toray Silicone Co. Ltd.; ausgegeben am 4. Dezember 1985) unvernetzte, verzweigte Organopolysiloxane mit mindestens einem mesogenen Rest beschrieben.

Gegenstand der Erfindung sind Organosilsesquioxane mit mindestens einer mesogenen Seitengruppe.

Die erfindungsgemäßen Organosilsesquioxane mit mindestens einer mesogenen Seitengruppe sind vorzugsweise solche der allgemeinen Formel

(R(SiR¹₂O)ₐSiO_{3/2})ₓ (I),

worin
- x: die Zahl 4, 6, 8, 10 oder 12, bevorzugt 6, 8 oder 10, besonders bevorzugt 8, ist,
- a: gleich oder verschieden sein kann und eine ganze Zahl von 0 bis 10, bevorzugt 0 bis 3, besonders bevorzugt 0 bis 1, ist,
- R¹: gleiche oder verschiedene, einwertige organische Reste bedeutet und
- R: gleich oder verschieden sein kann und einen chiralen oder achiralen mesogenen Rest bedeutet, mit der Maßgabe, daß bis zu x-1 der Reste R auch die Bedeutung von R¹ haben können.

Obwohl in Formel (I) nicht angegeben, können die Diorganosilylgruppen -(SiR¹₂)ₐ-, wobei a und R¹ die obengenannte Bedeutung haben, ganz oder teilweise durch andere Organosiliciumreste, wie beispielsweise cyclischen oder verzweigten Organo(poly)siloxanresten, ersetzt sein.

Der Begriff "mesogene Gruppen" ist in der Fachwelt gut bekannt. Es sind dies diejenigen Gruppen, die in einem Molekül flüssigkristalline Eigenschaften hervorrufen können.

Bei den mesogenen Resten R kann es sich um alle bisher bekannten mesogenen Gruppen handeln. Mesogene Gruppen werden beispielsweise in Dietrich Demus et al., "Flüssige Kristalle in Tabellen", VEB Deutscher Verlag für Grundstoffindustrie, Leipzig, Band I (1974) und Band II (1984) beschrieben, wobei die dort genannten Gruppen zum Inhalt der Offenbarung der hier beschriebenen Erfindung zu rechnen sind.

Beispiele für mesogene Gruppen sind Derivate des Cyclohexans, wie Cyclohexylcarbonsäurecyclohexylester, Cyclohexylcarbonsäurephenylester, Cyclohexylphenylether, Cyclohexylbenzole, Dicyclohexylderivate, Derivate des Stilbens, Zimtsäurederivate, wie zum Beispiel Zimtsäurealkylester und Zimtsäurearylester, Benzoesäurephenylester und seine Derivate, Steroide, wie Cholesterin, dessen Derivate, wie Cholesterinester, Cholestan und dessen Derivate, Benzylidenaniline, Azobenzol und seine Derivate, Azoxybenzol und dessen Derivate, Alkyl- und Alkoxyderivate von Biphenyl und Terphenyl sowie Schiff'sche Basen.

Vorzugsweise stellt R einen Rest der Formel

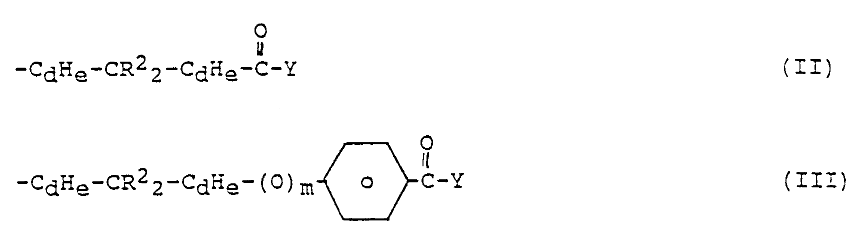

-C_{d}Hₑ-CR²₂-C_{d}Hₑ-(O)ₘ-Y (IV)

oder 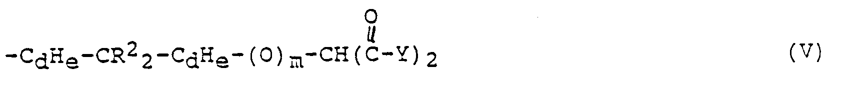
dar, wobei
- R²: gleich oder verschieden sein kann und Wasserstoffatom, Cyanogruppe, Hydroxylgruppe, Halogenatom und Alkylgruppe mit 1 bis 4 Kohlenstoffatomen bedeutet,
- d: jeweils gleiche oder verschiedene ganze Zahlen zwischen 0 und 12, bevorzugt zwischen 1 und 6, bedeutet,
- e: jeweils gleiche oder verschiedene ganze Zahlen zwischen 0 und 24, bevorzugt zwischen 1 und 12, bedeutet,
- m: 0 oder 1 ist und
- Y: Cholesterylrest sowie einen Rest der Formel (VI), (VIII), (IX) und (X)

bedeutet.

Bei dem Rest R² handelt es sich bevorzugt um Wasserstoffatom, Hydroxylgruppe, Fluor-, Chlor- und Bromatom sowie um den Methyl- und Ethylrest, wobei Wasserstoffatom, Fluoratom und Methylgruppe besonders bevorzugt sind.

Bei Rest Y kann es sich um einen Rest der allgemeinen Formel

-Pᵥ-(B_{f}-Eᵣ)_{c}-R⁴ (VI)

handeln, worin
- P: gleich oder verschieden sein kann und Sauerstoffatom, Schwefelatom, -C_{d}Hₑ- mit d und e gleich eine der obengenannten Bedeutungen und N-Alkylaminorest, bevorzugt Sauerstoffatom, bedeutet,
- v: gleich oder verschieden sein kann und eine ganze Zahl zwischen 0 und 12, bevorzugt 0, 1 oder 2 bedeutet,
- E: gleich oder verschieden sein kann und -CH₂-CH₂-, -CHO-, -OCH₂-, -COS- sowie ein konjugiertes Mehrfachbindungssystem zwischen gleichen oder verschiedenen Atomen, wie beispielsweise -CH=CH-, -C≡C-, -CH=N- und -N=N-, bedeutet,
- r: gleich oder verschieden sein kann und eine ganze Zahl zwischen 0 und 8, bevorzugt zwischen 0 und 2, besonders bevorzugt 1, bedeutet,
- c: gleich oder verschieden sein kann und eine ganze Zahl zwischen 1 und 5, bevorzugt zwischen 1 und 2, bedeutet,
- f: gleich oder verschieden sein kann und eine ganze Zahl zwischen 1 und 5, bevorzugt zwischen 1 und 2, bedeutet,
- R⁴: gleich oder verschieden ist und Wasserstoffatom, Halogenatom, Hydroxylgruppe, Nitrogruppe, Aminogruppe und Cyanogruppe sowie chirale und achirale Kohlenwasserstoff-, Kohlenwasserstoffoxy-, Ester-, Acyl- und Acyloxyreste, die gegebenenfalls substituiert sein können, bedeutet und
- B: gleich oder verschieden sein kann und einen zweiwertigen, cyclischen Rest, ausgewählt aus der Gruppe der cyclischen Kohlenwasserstoffe und der Heterocyclen, mit der Maßgabe, daß diese Reste mit Halogenatom, Hydroxylgruppe, Nitrogruppe, Aminogruppe und Cyanogruppe sowie chiralen und achiralen Kohlenwasserstoff-, Kohlenwasserstoffoxy-, Ester-, Acyl- und Acyloxygruppen, die gegebenenfalls substituiert sein können, bevorzugt mit Fluor- und Chloratom, Cyano-, Hydroxyl-, Nitro-, Amino- und Dimethylaminogruppe sowie Methyl-, Methoxy-, Ethyl- und Ethoxyreste, substituiert sein können, bedeutet.

Beispiele für Reste R⁴ sind Alkylreste, wie der Methyl-, Ethyl-, n-Propyl-, iso-Propyl-, 1-n-Butyl, 2-n-Butyl, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest; Cycloalkylreste, wie Cyclopentyl-, Cyclohexyl-, Cycloheptylreste, Methylcyclohexylreste und deren mit Halogenatomen und/oder Hydroxylgruppen substituierte Derivate sowie die entsprechenden Alkoxygruppen; Alkenylreste, wie der Vinyl- und der Allylrest, Arylreste, wie der Phenylrest und substituierte Phenylreste, sowie die entsprechenden Aryloxyreste.

Weitere Beispiele für Reste R⁴ sind substituierte und unsubstituierte Alkyl- oder Arylester, aliphatische und aromatische Carbonyl- und Oxycarbonylgruppen, die ebenfalls substituiert sein können.

Bevorzugte Reste R⁴ sind Wasserstoffatom, Cyano- und Nitrogruppe, Methyl-, Methoxy-, Ethyl- und Ethoxyreste sowie chirale und achirale Oxycarbonylgruppen und Estergruppen, wobei Wasserstoffatom, Cyanogruppe und Methoxygruppe besonders bevorzugt sind.

Beispiele für Rest B sind Phenylenreste, wie der 1,4-Phenylenrest, Cyclohexylenreste, wie der 1,4-Cyclohexylenrest, Pyridindiyl-, Pyrimidindiyl-, Pyridazindiyl-, Triazindiyl-, Tetrazindiyl-, Dioxandiyl-, Tetrahydrofurandiyl-, Thiophendiyl-, Thiazoldiyl-, Thiadiazoldiyl-, Pyrroldiyl- und Pyrazoldiylreste, Epoxygruppen sowie Spiroverbindungen.

Bei Rest Y kann es sich um einen Rest der allgemeinen Formel 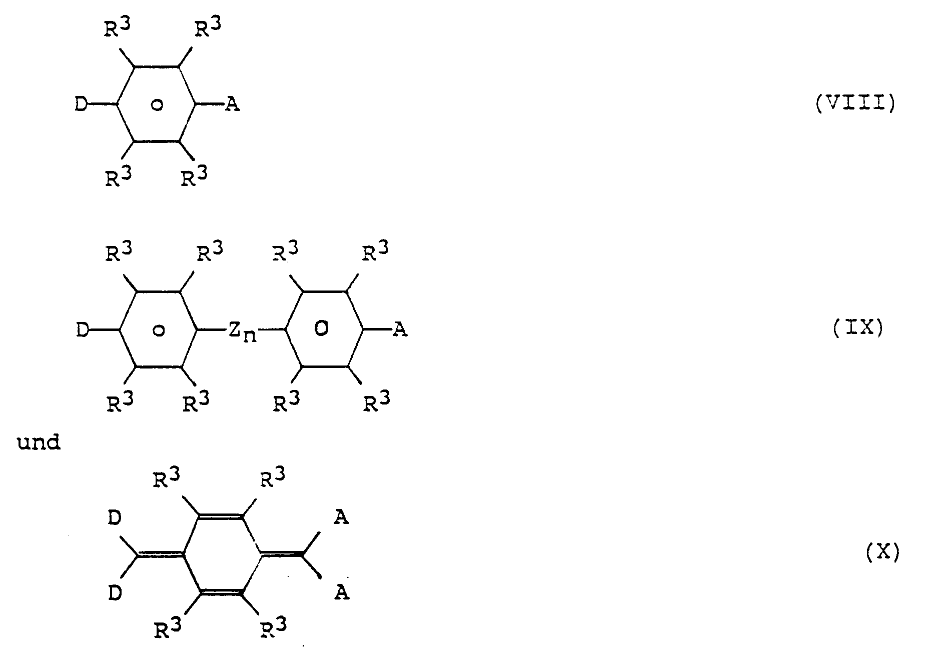
handeln, worin
- R³: gleich oder verschieden sein kann und eine der Bedeutungen von R⁴ hat,
- A: gleich oder verschieden sein kann und elektronenziehender Rest, wie beispielsweise Nitro-, Cyano-, Dicyanovinyl-, Tricyanovinyl-, Acyl-, Trifluormethyl- und Alkoxysulfonylgruppen, bedeutet,
- D: gleich oder verschieden sein kann und elektronenschiebender Rest, wie beispielsweise Halogenatom, Amino-, Hydroxyl-, Mercapto-, Alkyl-, Alkoxy-, Alkylthio-, Acyloxy- und Vinylgruppen, bedeutet,
- Z: konjugiertes Mehrfachbindungssystem zwischen gleichen oder verschiedenen Atomen, wie beispielsweise -CH=CH-, -C≡C-, -CH=N- und -N=N-, bedeutet,
- n: eine ganze Zahl zwischen 0 und 8, vorzugsweise zwischen 0 und 2, besonders bevorzugt 1, ist,

mit der Maßgabe, daß in den Resten Y der allgemeinen Formeln (VIII) bis (X) ein Wasserstoffatom durch eine chemische Bindung ersetzt ist. Vorzugsweise ist Rest Y im Rest R über D, wobei R und D eine der obengenannten Bedeutungen haben, angebunden, insbesondere bei D gleich Amino- oder Hydroxylgruppe.

Beispiele für Reste R³ sind alle die für den Rest R⁴ genannten Beispiele.

Bevorzugte Reste R³ sind Wasserstoffatom, Fluor- und Chloratom, Cyano-, Hydroxyl-, Nitro-, Amino- und Dimethylaminogruppe sowie Methyl-, Methoxy-, Ethyl- und Ethoxyreste, wobei Wasserstoffatom, Fluoratom, Chloratom und Cyanogruppe besonders bevorzugt sind.

Bevorzugte Reste D sind Amino-, Alkyl-, Alkoxy-, Alkylthio- sowie Acyloxygruppen, wobei Amino- und Alkoxygruppen besonders bevorzugt sind.

Die bevorzugte Bedeutung von Z ist -CH=CH-, -CH=N- und -N=N-.

Bei den Resten Y handelt es sich besonders bevorzugt um Reste der allgemeinen Formel (VI).

Beispiele für Rest R sind 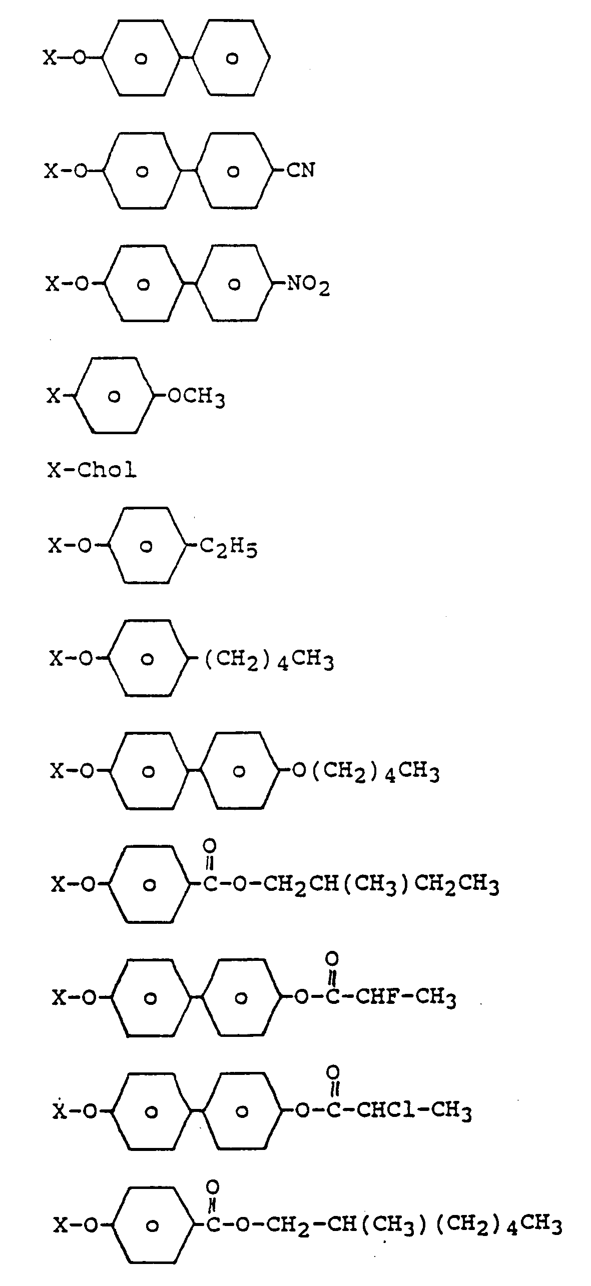 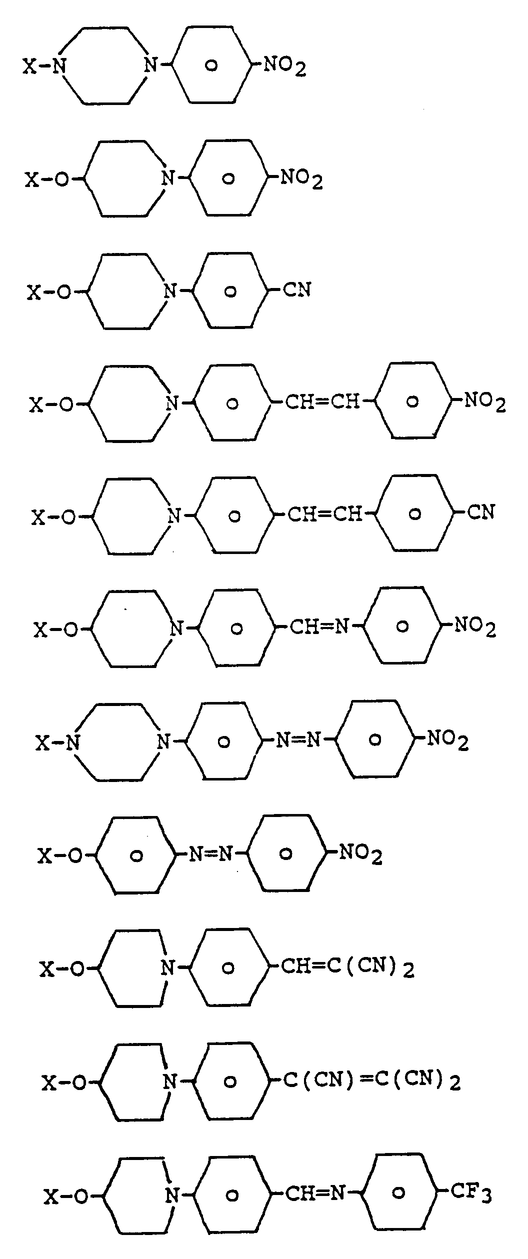 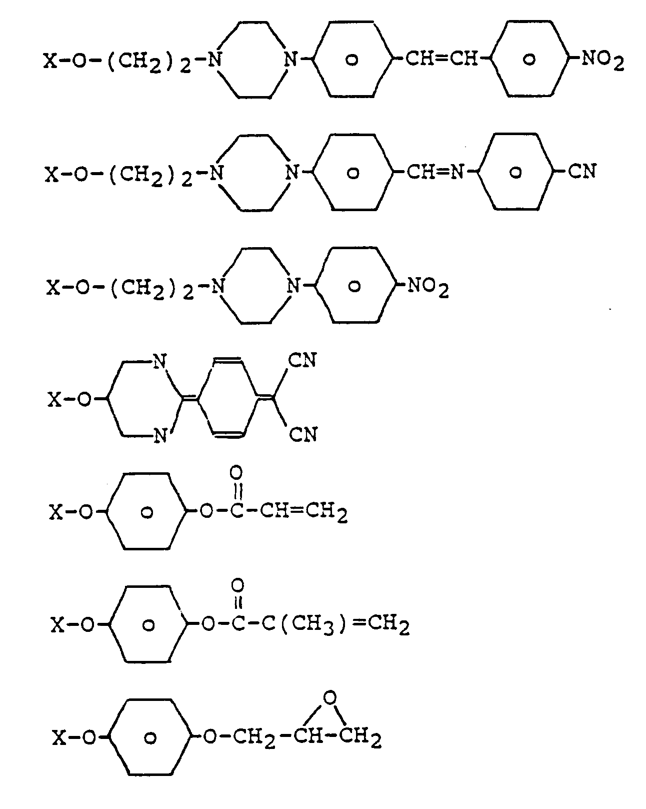
wobei X beispielsweise eine der Bedeutungen von 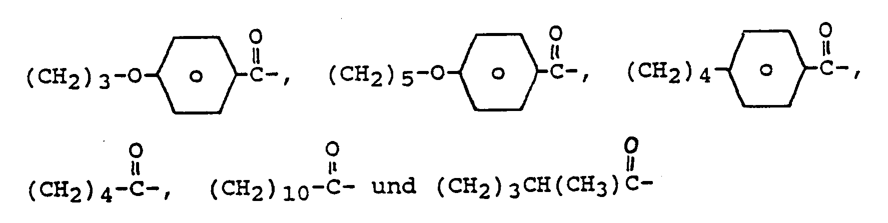
hat und Chol Cholesterylrest bedeutet,
und 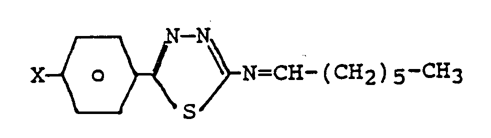 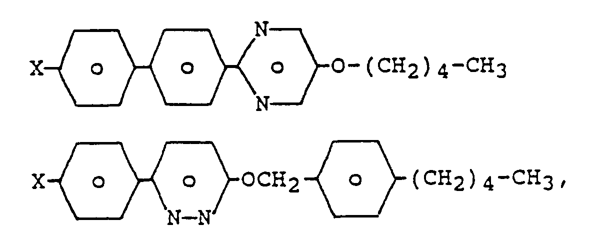
wobei X beispielsweise eine der Bedeutungen von (CH₂)₆-, (CH₂)₆-O-, (CH₂)₄- und (CH₂)₄-O- hat.

Vorzugsweise handelt es sich bei dem Rest R¹ um Kohlenwasserstoffreste mit 1 bis 6 Kohlenstoffatomen, die substituiert sein können.

Beispiele für Rest R¹ sind alle die für R⁴ genannten, substituierten und unsubstituierten Reste mit 1 bis 6 Kohlenstoffatomen.

Die erfindungsgemäßen Organosilsesquioxane mit mindestens einer mesogenen Seitengruppe besitzen vorzugsweise ein mittleres Molekulargewicht von 300 bis 20 000, besonders bevorzugt von 1 000 bis 10,000.

Beispiele für die erfindungsgemäßen Organosilsesquioxane mit mindestens einer mesogenen Seitengruppe sind 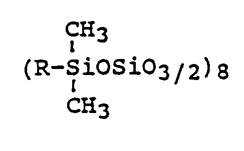
mit 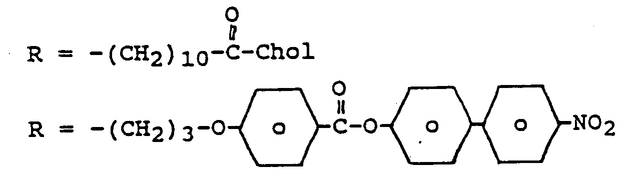 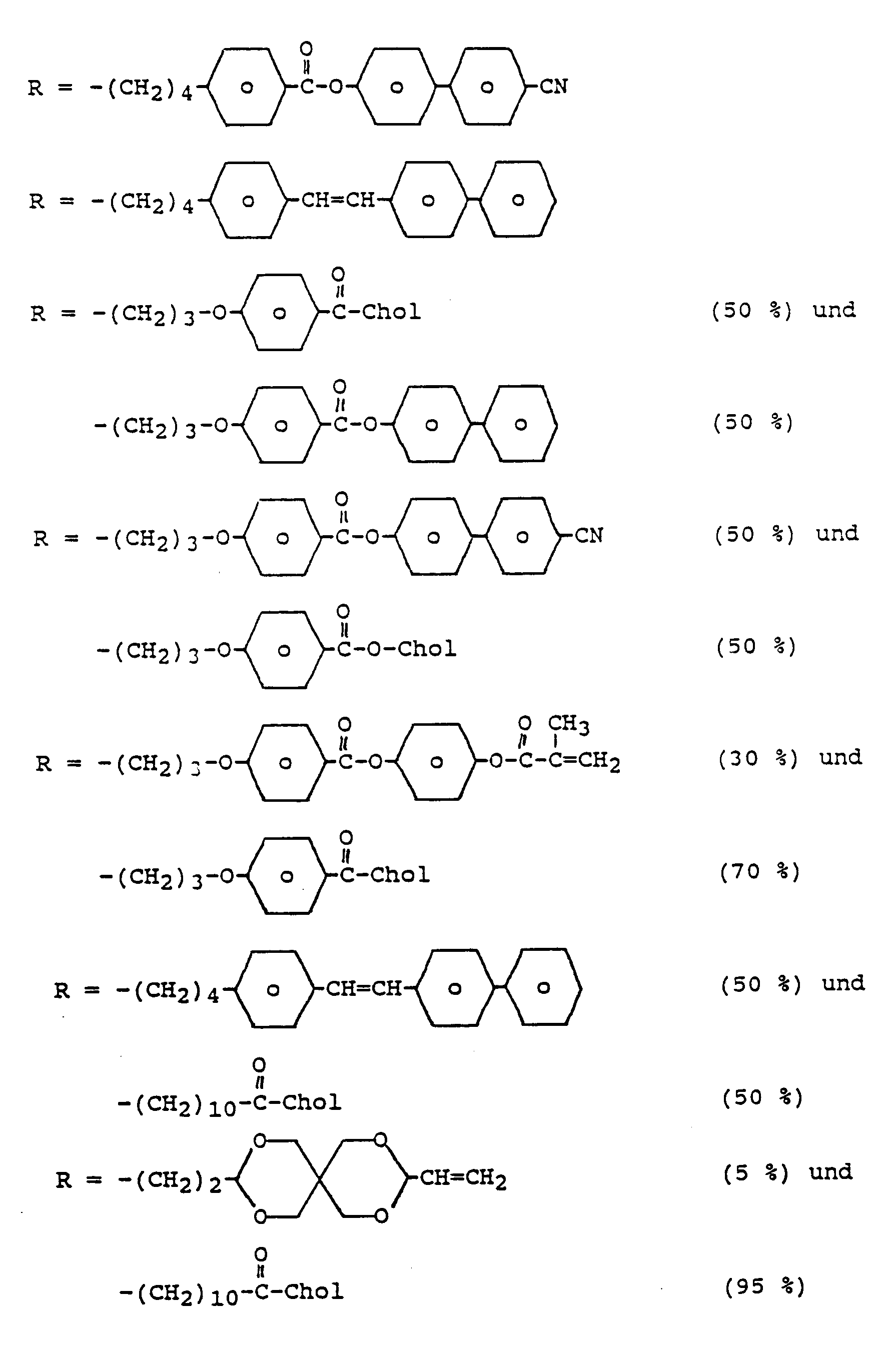 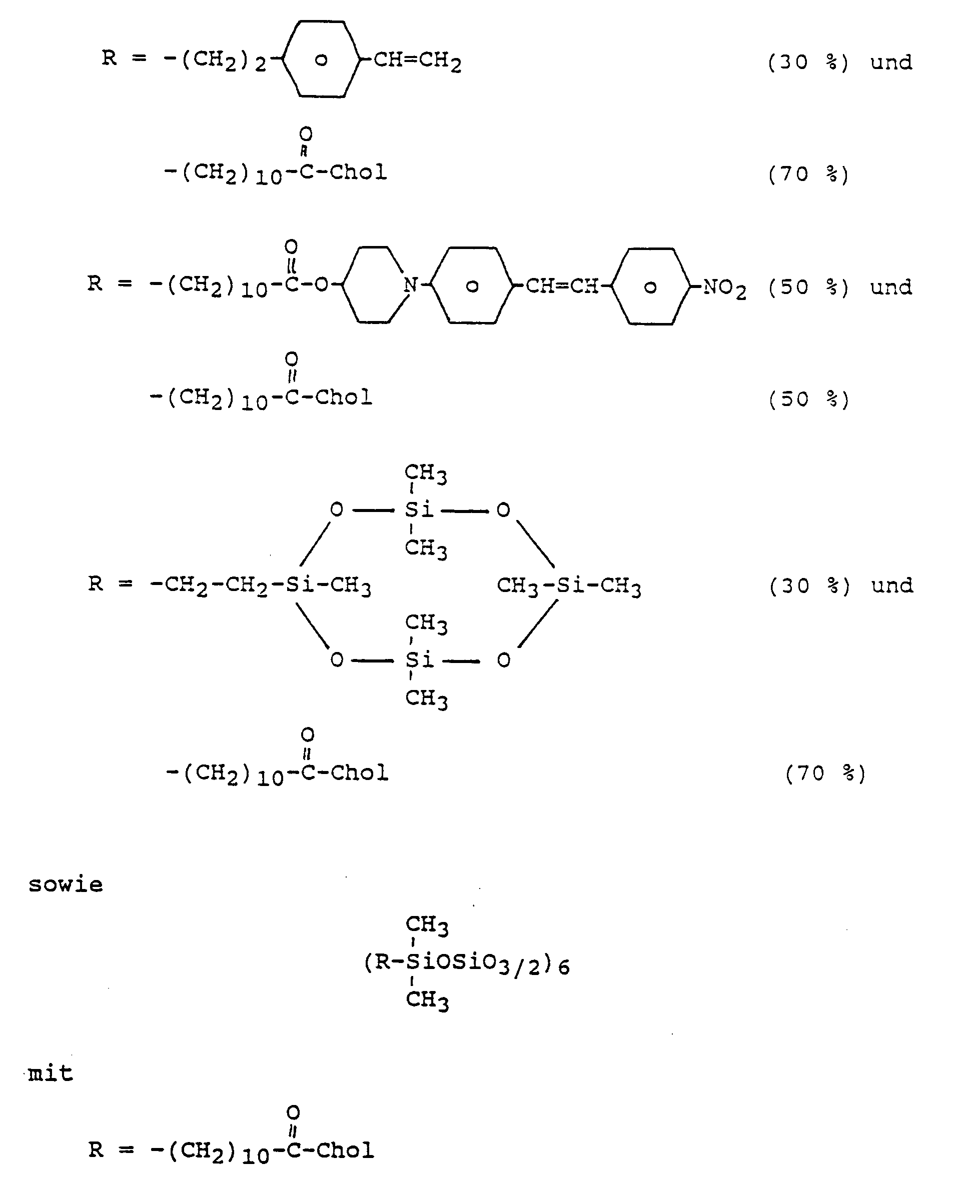 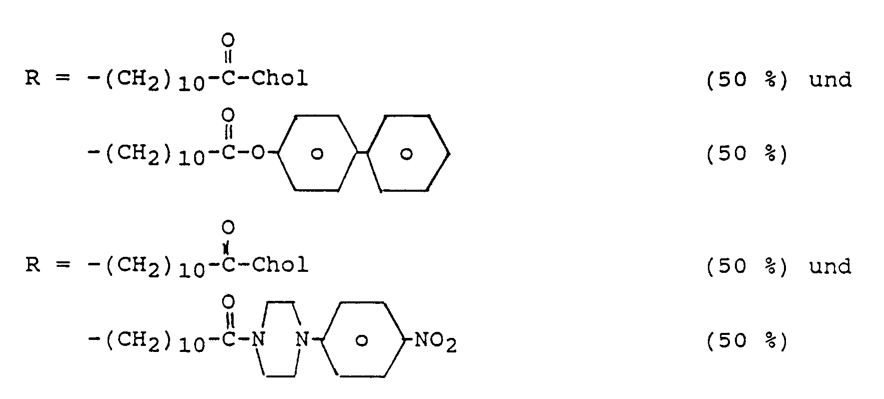
worin
Chol gleich Cholesterylrest bedeutet und die Prozentangaben auf die Gesamtanzahl der Reste R im jeweiligen erfindungsgemäßen Organosilsesquioxan bezogen sind.

Die erfindungsgemäßen Organosilsesquioxane mit mindestens einer mesogenen Seitengruppe lassen sich nach an sich bekannten Verfahren herstellen. Die erfindungsgemäßen Organosilsesquioxane mit mindestens einer mesogenen Seitengruppe werden vorzugsweise dadurch hergestellt, daß man Organosilsesquioxane mit mindestens einem Si-gebundenen Wasserstoffatom, insbesondere solche der Formel

(R_{1-b}H_{b}(SiR¹₂O)ₐSiO_{3/2})ₓ (XI)

wobei R, R¹, a und x eine der oben angegebenen Bedeutungen haben und b gleich oder verschieden sein kann und 0 oder 1 bedeutet, mit der Maßgabe, daß das Organosilsesquioxan der Formel (XI) mindestens ein Si-gebundenes Wasserstoffatom aufweist und die Reste R eine der Bedeutungen von R¹ haben, mit chiralen oder achiralen, mesogenen Verbindungen, die eine aliphatische Mehrfachbindung, bevorzugt eine endständige aliphatische Mehrfachbindung, aufweisen, insbesondere solchen der Formeln

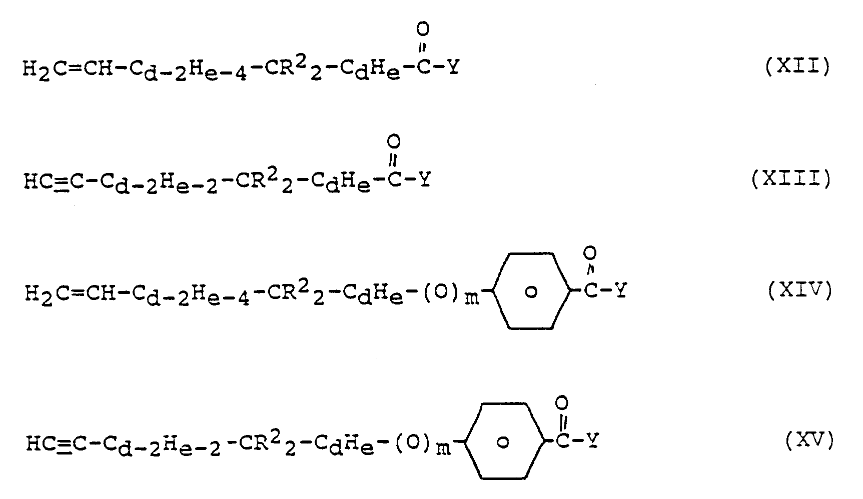

H₂C=CH-C_{d-2}Hₑ₋₄-CR²₂-C_{d}Hₑ-(O)ₘ-Y (XVI)

HC≡C-C_{d-2}Hₑ₋₂-CR²₂-C_{d}Hₑ-(O)ₘ-Y (XVII)

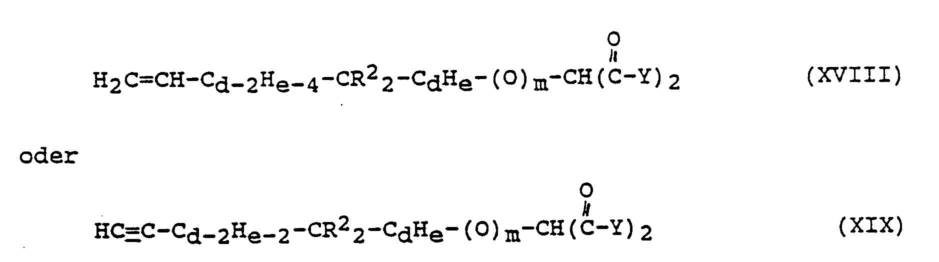

wobei
R², d, e, m und Y eine der obengenannten Bedeutungen haben, umsetzt.

Die bei dem erfindungsgemäßen Verfahren eingesetzten Organosilsesquioxane mit mindestens einem Si-gebundenen Wasserstoffatom können nach an sich bekannten Verfahren hergestellt werden. Hierzu sei beispielsweise auf die Arbeiten von M.G. Voronkov et al. Zhur. Obshchei Khimii 49 (7), Seite 1522 (1979); Dokl. Akad. Nauk. SSSR 281 (6), Seite 1374 (1985); ibid. 270 (4), Seite 888 (1983) sowie auf die deutsche Anmeldung mit dem Aktenzeichen P 38 37 397.1 (R. Weidner, Wacker-Chemie GmbH; angemeldet am 3. November 1988) bzw. die entsprechende Anmeldung in den USA mit der US-Ser.-Nr. 41 6073 verwiesen.

Bei dem erfindungsgemäß eingesetzten Organosilsesquioxan mit mindestens einem Si-gebundenen Wasserstoffatom kann es sich um eine einzelne Art wie auch um ein Gemisch aus mindestens zwei Arten derartiger Organosilsesquioxane mit mindestens einem Si-gebundenen Wasserstoffatom handeln.

Die bei dem erfindungsgemäßen Verfahren eingesetzten chiralen oder achiralen, mesogenen Verbindungen, die eine aliphatische Mehrfachbindung aufweisen, sind handelsübliche Produkte bzw. können nach in der organischen Chemie gängigen Methoden hergestellt werden. Hierzu sei beispielsweise auf E.C. Taylor, J.S. Scotnicki, Synthesis (1981) 606 verwiesen.

Bei den erfindungsgemäß eingesetzten chiralen oder achiralen mesogenen Verbindungen, die eine aliphatische Mehrfachbindung aufweisen, kann es sich um eine einzelne Art wie auch um ein Gemisch aus mindestens zwei Arten derartiger Verbindungen handeln.

Die erfindungsgemäße Umsetzung von Organosilsequioxan mit mindestens einem Si-gebundenen Wasserstoffatom und chiraler oder achiraler, mesogener Verbindung, die eine aliphatische Mehrfachbindung aufweist, wird vorteilhafterweise in Anwesenheit von Katalysator durchgeführt.

Die eingesetzten Katalysatoren können im Rahmen des erfindungsgemäßen Verfahrens die gleichen sein, die auch bisher zum Anlagern von Si-gebundenen Wasserstoffatomen an aliphatische Mehrfachbindungen eingesetzt wurden. Es handelt sich dabei hauptsächlich um Metalle der 8. Nebengruppe und um deren anorganische und organische Verbindungen, wobei Platin und dessen Verbindungen bevorzugt werden.

Beispiele für solche Katalysatoren sind auf einem inerten Träger, wie Aktivkohle, SiO₂ oder Al₂O₃, abgeschiedenes, feinverteiltes elementares Platin gemäß US-PS 2,970,150 (D.L. Bailey, Union Carbide Corporation; ausgegeben am 31. Januar 1961), Hexachloroplatinsäure gemäß US-PS 2,823,218 (J.L. Speier, Dow Corning Corporation; ausgegeben am 11. Februar 1958) und davon abgeleitete Chloroplatinate, Platinkomplexe des Typs L·PtCl₂, wobei L ein lineares oder cyclisches Monoolefin, wie Ethen, Propen und Cyclohexen, bedeutet, gemäß US-PS 3,159,601 und US-PS 3,159,662 (Bruce A. Ashby, General Electric Company; jeweils ausgegeben am 1. Dezember 1964), Platinkomplexe des Typs L·PtCl₂, wobei L ein cyclisches Diolefin, wie 1,5-Cyclooctadien, Norbornadien und Cyclopentadien, bedeutet, gemäß JP-OS 79/76,529 und JP-OS 79/76,530 (Masatoshi Arai, Shin-Etsu Chemical Industry Co., Ltd.; jeweils ausgegeben am 19. Juni 1979) und US-PS 4,276,252 (G. Kreis, Wacker-Chemie GmbH, ausgegeben am 30. Juni 1981) oder ein cyclisches Polyolefin bedeutet gemäß der deutschen Anmeldung mit dem Aktenzeichen P 39 06 514.6 (G. Wenski, Consortium für elektrochemische Industrie GmbH; angemeldet am 1. März 1989), platinvinylsiloxankomplexe gemäß US-PS 3,814,730 (B.D. Karstedt, General Electric Company; ausgegeben am 4. Juni 1974) und Acetylacetonatkomplexe des Platins gemäß US-PS 4,177,341 (G. Kreis, Consortium für elektrochemische Industrie GmbH; ausgegeben am 4. Dezember 1979).

Bei dem erfindungsgemäßen Verfahren werden wegen deren hohen Wirksamkeit besonders bevorzugt Platinkomplexe des Typs L·PtCl₂, wobei L ein cyclisches Di- oder Polyolefin bedeutet, insbesondere Dicyclopentadien-Platindichlorid, eingesetzt.

Bei dem erfindungsgemäß eingesetzten Katalysator kann es sich um eine einzelne Art von Katalysator wie auch um ein Gemisch aus mindestens zwei verschiedenen Arten derartiger Katalysatoren handeln.

Die im Rahmen des erfindungsgemäßen Verfahrens eingesetzten Mengen an Katalysator können die gleichen sein wie bei den bisher bekannten Verfahren zum Anlagern von Si-gebundenem Wasserstoff an aliphatische Mehrfachbindung in Gegenwart von Katalysator. Es sind dies vorzugsweise 0,1 bis 1000 Gewichts-ppm, besonders bevorzugt 2 bis 400 Gewichts-ppm, jeweils berechnet als elementares Platin, bezogen auf das Gesamtgewicht der Reaktionsmasse.

Das erfindungsgemäße Verfahren kann in Anwesenheit oder in Abwesenheit von Lösungsmittel durchgeführt werden, wobei die Verwendung von in bezug auf die Reaktionsmasse inertem organischen Lösungsmittel bevorzugt wird.

Beispiele für Lösungsmittel sind Alkohole, wie Methanol, Ethanol, n-Propanol, iso-Propanol, n-, sec.- und tert.-Butanol und 2-Butanol; Ester, wie Methylacetat, Ethylacetat, n-und iso-Propylacetat, n-, sec.- und tert.-Butylacetat, Ethylformiat und Diethylcarbonat; Ether, wie Dioxan, Tetrahydrofuran, Diethylether, Di-n-propylether, Diisopropylether, Di-n-butylether und Anisol; chlorierte Kohlenwasserstoffe, wie Dichlormethan, Trichlormethan, Tetrachlormethan, 1,2-Dichlorethan, 1,1,1-Trichlorethan, Trichlorethylen, Tetrachlorethylen und Chlorbenzol; Kohlenwasserstoffe, wie Pentan, n-Hexan, Hexan-Isomerengemische, Cyclohexan, Heptan, Octan, Waschbenzin, Petrolether, Benzol, Ethylbenzol, Toluol, Xylole und Ketone, wie Aceton, Methylethylketon, Methylisobutylketon, oder Gemische dieser Lösungsmittel, wobei Toluol, Dichlormethan und Tetrahydrofuran besonders bevorzugt eingesetzt werden.

Die Bezeichnung Lösungsmittel bedeutet nicht, daß sich alle Reaktionskomponenten in diesen lösen müssen. Die Reaktion kann auch in einer Suspension oder Emulsion eines oder mehrerer Reaktionspartner durchgeführt werden.

Die im Rahmen des erfindungsgemäßen Verfahrens angewandten Temperaturen und Drücke können die gleichen sein wie bei den bisher bekannten Verfahren zum Anlagern von Si-gebundenem Wasserstoff an aliphatische Mehrfachbindung in Gegenwart von Katalysator. Es sind dies vorzugsweise Temperaturen zwischen 0 und 200°C und Drücke zwischen 900 und 1100 hPa, wobei Temperaturen zwischen 20 und 120°C besonders bevorzugt sind. Falls erwünscht, können auch höhere oder niedrigere Drücke angewendet werden.

Die Reaktionszeit hängt unter anderem von der Reaktionstemperatur, der Aktivität und der Menge des Katalysators ab. Sie liegt im allgemeinen zwischen 20 Minuten und 24 Stunden.

Selbstverständlich kann bei dem erfindungsgemäßen Verfahren die Reaktionsmasse außer Organosilsesquioxan mit mindestens einem Si-gebundenen Wasserstoffatom, chiraler oder achiraler, mesogener Verbindung, Katalysator und gegebenenfalls Lösungsmittel noch weitere Stoffe enthalten.

Die erfindungsgemäßen Organosilsesquioxane mit mindestens einer mesogenen Seitengruppe haben den Vorteil, daß sie an dem aufgrund ihrer käfigartigen, starren Struktur kleinen Rückgrat eine hohe Zahl mesogener Gruppen tragen können, die eine weite Variation der Eigenschaften ermöglichen. Diese näherungsweise kugelförmige und damit für gutes Fließverhalten prädestinierte Struktur ermöglicht selbst bei hohem Molekulargewicht noch eine gute Orientierbarkeit in flüssigkristalliner Phase.

Die erfindungsgemäßen Organosilsesquioxane mit mindestens einer mesogenen Seitengruppe haben des weiteren den Vorteil, daß sie relativ hohe Glas- und insbesondere hohe Klärpunkte aufweisen. Sie bilden oberhalb ihrer jeweiligen Glaspunkte in der flüssigkristallinen Phase duktile Filme, die sich bereits durch mechanische Behandlung sehr leicht orientieren lassen. Dieser orientierte Zustand ergibt einen transparenten Film, der sich durch Abschrecken unterhalb des jeweiligen Glaspunktes einfrieren läßt. Selbstverständlich lassen sie sich auch durch gängige Methoden, wie durch Oberflächeneffekte, elektrische bzw. magnetische Felder ausrichten.

Das erfindungsgemäße Verfahren hat den Vorteil, daß die Eigenschaften der erfindungsgemäß hergestellten Organosilsesquioxane mit mindestens einer mesogenen Seitengruppe auf relativ einfache Weise, ganz gezielt, den gestellten Anforderungen entsprechend eingestellt werden können. So können beispielsweise durch die Wahl der bis zu x gleichen oder verschiedenen mesogenen Reste, wobei x die obengenannte Bedeutung hat, sowohl die Art und Breite der flüssigkristallinen Phase als auch die mechanischen Eigenschaften variiert werden.

Die erfindungsgemäßen Organosilsesquioxane mit mindestens einer mesogenen Seitengruppe können für alle Zwecke eingesetzt werden, für die auch bisher Verbindungen mit flüssigkristallinen Eigenschaften eingesetzt werden. So können sie beispielsweise in der Optoelektronik, der nichtlinearen Optik, der Kommunikationstechnik, in der Computertechnik, in Displays, optischen Schaltern, Informationsspeichern und integrierten Schaltkreisen sowie für medizinische Einsatzzwecke Anwendung finden. Des weiteren eignen sie sich auch für mechanische Einsatzzwecke, wie beispielsweise in der Hydraulik.

Darüberhinaus kann das erfindungsgemäße Organosilsesquioxan mit mindestens einer mesogenen Seitengruppe, sofern es mindestens eine Gruppe, die zur Vernetzung befähigt ist, aufweist, auf an sich bekannte Weise, wie beispielsweise unter UV-Bestrahlung oder dem Einfluß von Radikalbildnern, wie etwa organische Peroxide, vernetzen gelassen werden. Zur Vernetzung geeignet sind insbesondere Organosilsesquioxane gemäß Formel (I), bei denen die mesogenen Reste R zur Vernetzung befähigte Gruppen, wie Acrylgruppen, Methacrylgruppen, Epoxygruppen, Stilbenderivate und Gruppen mit für die Hydrosilylierungsreaktion notwendigen, endständigen Kohlenstoff-Kohlenstoff-Mehrfachbindungen, beinhalten. Die Vernetzung der erfindungsgemäßen Organosilsesquioxane kann dabei im Anschluß an das erfindungsgemäße Verfahren oder während des erfindungsgemäßen Verfahrens erfolgen. Vernetzung während des erfindungsgemäßen Verfahrens erhält man insbesondere dann, wenn Verbindungen mit mindestens zwei endständigen Kohlenstoff-Kohlenstoff-Mehrfachbindungen, wie 1,4-Divinylbenzol, 4,4'-Divinylbiphenyl, 1,3-Butadien, 1,5-Hexadien und 3,9-Divinyl-2,4,8,10-tetraoxaspiro(5.5)undecan, einsetzt werden.

Die dreidimensionale Struktur der erfindungsgemäßen Organosilsesquioxane ermöglicht zudem je nach Wahl der Reste R eine Vernetzung in alle drei Raumrichtungen mit einem hohen Vernetzungsgrad.

Die erfindungsgemäßen Organosilsesquioxane mit mindestens einer mesogenen Seitengruppe können als solche eingesetzt werden. Sie können jedoch auch in Kombination mit anderen Komponenten, wie beispielsweise cyclischen und/oder linearen Organopolysiloxanen, die gegebenenfalls flüssigkristalline Eigenschaften aufweisen, eingesetzt werden.

In den nachstehend beschriebenen Beispielen beziehen sich alle Angaben von Teilen und Prozentsätzen, falls nicht anders angegeben, auf das Gewicht. Sofern nicht anders angegeben, werden aie nachstehenden Beispiele bei einen, Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, durchgeführt.

Die Glastemperaturen und die Klärpunkte der erfindungsgemäßen Organosilsesquioxane mit mindestens einer mesogenen Seitengruppe werden jeweils durch Differentialthermoanalyse (DTA) bestimmt. Der Reinheitsgrad wird durch Gel-Permeations-Chromatographie (GPC) ermittelt.

### Beispiel 1

### Herstellung von Octa(hydrogendimethylsiloxy)octasilsesquioxan der Formel (HSi(CH₃)₂OSiO_{3/2})₈

82,2 g gefällte Kieselsäure werden mit 1250 ml 10%iger, wäßriger Tetramethylammoniumhydroxidlösung versetzt. Nach 16-stündigem Rühren bei 25°C und 8-stüngigem Rühren bei 50°C erhält man eine klare Lösung. Die Lösung wird bis auf zwei Drittel ihres Ausgangsvolumens eingeengt und das erhaltene Tetramethylammoniumsilikat bei 4°C zur Kristallisation geMan erhält 359,5 g noch wasserhaltiges Tetramethylammoniumsilikat. 160 g Tetramethylammoniumsilikat werden portionsweise zu einem gut gerührten Gemisch aus 400 ml Wasser, 1000 ml Isopropanol, 1500 ml (1136 g) 1,1,3,3-Tetramethyldisiloxan (erhältlich unter der Bezeichnung "HSi2" bei der Wacker-Chemie GmbH, D-8000 München) und 200 ml 10%iger Salzsäure gegeben und anschließend das Reaktionsgemisch 4 Stunden Bei Raumtemperatur gerührt. Dann werden die Phasen getrennt, die organische Phase mit Wasser neutral gewaschen, über Natriumsulfat getrocknet und vollständig eingedampft. Der Rückstand wird aus Aceton umkristallisiert. Es werden 52,0 g Octa(hydrogendimethylsiloxy)octasilsesquioxan erhalten.

Zu einem Gemisch aus 1,0 g des oben beschriebenen Octa(hydrogendimethylsiloxy)octasilsesquioxans, 1,3 g 4-Allyloxybenzoesäurebiphenylester der Strukturformel 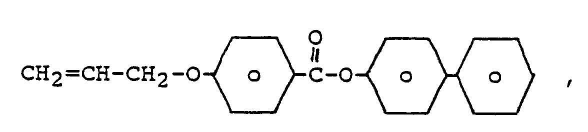
2,2 g 4-Allyloxybenzoesäurecholesterylester und 12 ml wasserfreiem Toluol werden 0,08 ml einer 1-prozentigen Lösung von Dicyclopentadienplatindichlorid in Dichlormethan, welche nach literaturbekannten Verfahren, wie beispielsweise J. Chatt, L.M. Vallarino, L.M. Venanzi, J. chem. Soc. (London) (1957) 2496-505 und H.C. Clark, L.E. Manzer, J. Organometal. Chem. 59 (1973) 411-28, hergestellt wird, zugegeben und das so erhaltene Gemisch 90 Minuten unter Rückfluß zum Sieden erhitzt. Zur Abtrennung der platinhaltigen, feinen Niederschläge wird über eine kurze, mit Kieselgel gefüllte Säule abfiltriert. Anschließend werden die Lösungsmittel bei vermindertem Druck abdestilliert und der Rückstand in Tetrahydrofuran aufgenommen. Durch Zugabe von Ethanol wird das Reaktionsprodukt ausgefällt, abfiltriert und bei vermindertem Druck und einer Temperatur von 60°C getrocknet. Es werden 3,5 g eines farblosen Feststoffs erhalten, der gemäß GPC einen Reinheitsgrad von 100 % aufweist. Diese Substanz wird auf einen Objektträger aufgebracht, mit einem Deckplättchen versehen und langsam erwärmt. Ab 110 °C läßt sich die Substanz durch leichten Druck und mechanisches Scheren orientierten. Der so erhaltene transparente Film zeigt von Raumtemperatur bis 127°C eine smektisch A-Phase mit kristallinem Anteil und von 127°C bis zum Klärbereich zwischen 200 und 220°C eine smektisch A-Phase.

### Beispiel 2

Zu einem Gemisch von 0,2 g des in Beispiel 1 beschriebenen Octa(hydrogendimethylsiloxy)octasilsesquioxans, 0,9 g 10-Undecensäurecholesterylester und 3 ml wasserfreiem Dichlormethan werden 0,02 ml der in Beispiel 1 beschriebenen 1-prozentigen Dicyclopentadienplatindichloridlösung gegeben. Mit dem so erhaltenen Gemisch wird wie in Beispiel 1 beschrieben verfahren. Es werden 0,6 g eines farblosen Feststoffs erhalten, der gemäß GPC einen Reinheitsgrad von 100 % aufweist. Der nach der in Beispiel 1 beschriebenen Präparation (Scherung ab 100 °C) erhaltene transparente Film zeigt von Raumtemperatur bis 108°C eine instabile, zu Kristallisation neigende smektisch A-Phase und von 108°C bis zum Klärpunkt von 160 °C eine reine smektisch A-Phase. Der Glaspunkt liegt bei 50°C.

### Beispiel 3

Zu einem Gemisch von 0,5 g dem in Beispiel 1 beschriebenen Octa(hydrogendimethylsiloxy)octasilsesquioxan, 1,4 g 4-Allyloxybenzoesäure-(4'-cyanobiphenyl)ester der Strukturformel 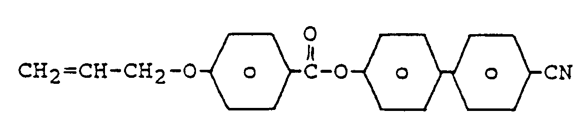
und 5 ml wasserfreiem Toluol werden 0,04 ml der in Beispiel 1 beschriebenen Dicyclopentadienplatindichloridlösung gegeben. Mit dem so erhaltenen Gemisch wird wie in Beispiel 1 beschrieben verfahren. Es werden 0,8 g eines farblosen Feststoffs erhalten, der gemäß GPC einen Reinheitsgrad von 100 % aufweist. Der nach der in Beispiel 1 beschriebenen Präparation (Scherung ab 130 °C) erhaltene transparente Film zeigt von Raumtemperatur bis zum Bereich zwischen 118 und 135°C eine smektisch B-Phase mit kristallinem Anteil und darüber bis zum Klärbereich über 300 °C eine smektisch A-Phase. Der Glaspunkt liegt bei 102°C.

### Beispiel 4

Zu einem Gemisch von 0,5 g des in Beispiel 1 beschriebenen Octa(hydrogendimethylsiloxy)octasilsesquioxans, 1,1 g 4-Allyloxybenzoesäurecholesterylesters, 0,7 g 4-Allyloxybenzoesäure-(4'-nitrobiphenyl)ester der Strukturformel 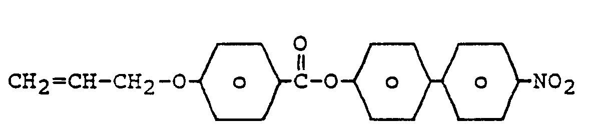
und 6 ml wasserfreiem Toluol werden 0,04 ml der in Beispiel 1 beschriebenen Dicyclopentadienplatindichloridlösung gegeben. Mit dem so erhaltenen Gemisch wird wie in Beispiel 1 beschrieben verfahren. Es werden 0,5 g eines farblosen Feststoffs erhalten, der gemäß GPC einen Reinheitsgrad von 99,5 % aufweist. Der nach der in Beispiel 1 beschriebenen Präparation (Scherung bei 140 °C) erhaltene transparente Film zeigt von Raumtemperatur bis zum Bereich zwischen 105 und 170°C eine smektisch A-Phase mit kristallinem Anteil und darüber bis zum Klärbereich über 300 °C eine smektisch A-Phase. Der Glaspunkt liegt bei 60°C.

### Beispiel 5

Zu einem Gemisch von 5,75 g 4-Allyloxybenzoesäure-(4-hydroxyphenyl)ester (herstellbar gemäß der deutschen Anmeldung DE-A 38 30 592; F.-H. Kreuzer, Consortium für elektrochemische Industrie, angemeldet am 8. September 1988) und 20 ml trockenem Toluol werden bei einer Temperatur von 90°C unter Argonatmosphäre 2,42 g Hexamethyldisilazan (käuflich erhältlich bei der Wacker-Chemie GmbH, D-8000 München) zugetropft und anschließend 1 Stunde unter Rückfluß zum Sieden erhitzt. Die flüchtigen Bestandteile werden abdestilliert, der Rückstand zusammen mit 27,2 g 4-Allyloxybenzoesäurecholesterylester und 9,8 mg des in Beispiel 1 beschriebenen Dicylopentadienplatindichlorids in 40 ml wasserfreiem Dichlormethan bei einer Temperatur von 60°C gelöst und mit 10 g des in Beispiel 1 beschriebenen Octa(hydrogendimethylsiloxy)octasilsesquioxans versetzt. Die so erhaltene Mischung wird 1 Stunde unter Rückfluß zum Sieden erhitzt, anschließend das Dichlormethan abdestilliert und durch Toluol ersetzt. Das so erhaltene Gemisch wird zum Sieden erhitzt und während einer Stunde unter ständigem Abdestillieren des Lösungsmittelgemisches tropfenweise mit einer Lösung von 0,4 g konzentrierter Salzsäure in 60 ml Ethanol versetzt, wobei die Trimethylsilyl-Schutzgruppe abgespalten wird. Nach Abziehen des Lösungsmittels werden 7 g eines farblosen Feststoffs erhalten, die in 150 ml Toluol gelöst und mit 0,83 g Methacrylsäureanhydrid sowie 0,3 g 4-Toluolsulfonsäure eine Stunde auf 100°C erhitzt werden. Nach dem Erkalten wird das methacrylierte, zur Vernetzung befähigte Produkt aus Toluol/Methanol umgefällt. Es werden 6 g eines leicht grauen Feststoffs erhalten, der bei Raumtemperatur amorph ist und aufgrund seiner leichten Vernetzbarkeit durch UV-Licht im Dunkeln aufbewahrt werden muß.

### Beispiel 6

### Herstellung von Deca(hydrogendimethylsiloxy)decasilsesquioxan der Formel (HSi(CH₃)₂OSiO_{3/2})₁₀

490 g (500 ml) 40%ige wäßrige Tetra-n-butylammoniumhydroxidlösung (käuflich erhältlich bei der Firma Fluka, D-7910 Neu-Ulm) werden mit 700 ml Wasser verdünnt und mit 223,2 g Tetraethoxysilan langsam versetzt. Anschließend wird die Mischung 24 Stunden bei Raumtemperatur gerührt. Danach engt man destillativ auf 64,9% des ursprünglichen Gesamtvolumens ein und bringt die Lösung bei 4°C zur Kristallisation. 50 g dieses Tetra-n-butylammoniumsilicats werden bei 5°C langsam zu einem Gemisch aus 250 ml (189,3 g) 1,1,3,3-Tetramethyldisiloxan (erhältlich unter der Bezeichnung "HSi2" bei der Wacker-Chemie GmbH, D-8000 München), 130 ml (112,2 g) Dimethylchlorsilan und 50 ml Isopropanol gegeben. Anschließend wird bei Raumtemperatur 6,5 Stunden lang gerührt. Dann versetzt man mit 300 ml Eiswasser, wäscht die organische Phase neutral, trocknet über Natriumsulfat, filtriert ab und entfernt das Lösungsmittel bei 60°C und 1500 Pa. Es verbleiben 8,5 g einer zähen Kristallmasse. Kristallisation aus wenig 1,1,3,3-Tetramethyldisiloxan liefert 1,86 g Deca(hydrogendimethylsiloxy)decasilsesquioxan.

Eine unter Rückfluß siedende Lösung von 4,3 g 10-Undecensäurecholesterylester in 8 ml trockenem Toluol wird mit 0,08 ml der in Beispiel 1 beschriebenen Dicyclopentadienplatindichloridlösung versetzt und zu der so erhaltenen Mischung innerhalb von 2 Stunden eine Lösung von 0,5 g des oben beschriebenen Deca(hydrogendimethylsiloxy)decasilsesquioxans in 5 ml trockenem Toluol zugetropft. Danach wird die Mischung eine weitere Stunde unter Rückfluß gekocht. Zur Abtrennung der platinhaltigen feinverteilten Niederschläge wird über eine kurze, mit Kieselgel gefüllte Säule abfiltriert. Aus der Toluollösung wird das Rohprodukt durch Zugabe von 50 ml Ethanol ausgefällt und durch Filtration abgetrennt. Mehrmaliges weiteres Lösen in Toluol, Ausfällen mit Ethanol und anschließendes Filtrieren liefert nach dem Trocknen Bei 90°C und reduziertem Druck 1,5 g einer nach GPC zu 100% reinen, farblosen Substanz. Die vollständig substituierte Struktur wird durch das aus dem GPC erhaltenen Molekulargewicht von circa 6800, das IR Spektrum (keine Si-H Bande mehr) sowie durch das ²⁹Si-NMR Spektrum (Signale bei 11,99 und -110,0 ppm) bestätigt. Die Substanz wird auf einen Objektträger gebracht, mit einem Deckplättchen versehen und langsam erwärmt. Ab 128°C läßt sich durch mechanische Scherung ein transparenter Film erzeugen. Dieser zeigt von Raumtemperatur bis 50°C eine smektisch-B Phase mit kristallinem Anteil, darüber bis 80°C eine reine smektisch-B Phase, oberhalb von 88°C bis zum Klärpunkt bei 165°C liegt eine smektisch-A Phase vor. Der Glaspunkt der Verbindung liegt bei 51°C.

### Beispiel 7

### a) Synthese von 4-Buten-3-ylbenzylchlorid

Eine aus 92 g Magnesiumspänen und 150,8 ml Allylchlorid in 1,2 l wasserfreiem Tetrahydrofuran hergestellte Grignardlösung wird bei 15°C langsam zu einer Lösung von 227,0 g α,α'-Dichlor-p-xylol in 1 l wasserfreiem Tetrahydrofuran getropft und die Mischung bei Raumtemperatur 14 Stunden gerührt. Anschließend wird die Reaktionsmischung auf verdünnte Salzsäure gegossen (pH = 4-5), die organische Phase abgetrennt, die wäßrige Phase mehrmals mit Methyl-tert.-butylether (erhältlich unter der Bezeichnung Driveron-S bei den chemischen Werken Hüls AG, D-4370 Marl) ausgeschüttelt und die vereinigten organischen Phasen über Natriumsulfat getrocknet. Zur Abtrennung etwaiger Magnesiumsalze wird über eine mit Tonsil gefüllte Säule filtriert, die organische Phase nochmals über Natriumsulfat getrocknet und das Lösungsmittel abdestilliert. Der Rückstand wird in kaltem n-Heptan aufgeschlämmt, die Heptanphase nach dem Filtrieren im Kühlschrank mehrere Stunden stehengelassen, erneut filtriert und das Lösungsmittel abgezogen. Es resultieren 27 g 4-Buten-3-ylbenzylchlorid als gelbliches Öl.

### b) Synthese von 4-Buten-3-ylbenzyldiethylphosphonat

Zu 121,3 ml Triethylphosphit werden bei 90°C 112,7 g des oben beschriebenen 4-Buten-3-ylbenzylchlorids langsam zugetropft. Anschließend wird die Temperatur 3 Stunden bei 110°C, 8 Stunden bei 130°C und zum Schluß 3 Stunden bei 150°C gehalten. Nach Destillation über eine 15-cm-Vigreuxkolonne bei 6 x 10⁻³ Torr werden zwischen 127°C und 130°C 140,03 g 4-Buten-3-ylbenzyldiethylphosphonat erhalten.

### c) Synthese von 4-Phenyl-4'-buten-3-ylstilben

Zu einer auf 0°C gekühlten Mischung von 29,2 g Kalium-tert.-butylalkoholat, 0,6 g Kaliumiodid und 2,4 g Kronenether 18-Cr-6 wird langsam unter starkem Rühren eine Mischung von 45,2 g 4-Biphenylylaldehyd (käuflich erhältlich bei der Janssen Chimica, D-4054 Nettetal) und 70,0 g des oben beschriebenen 4-Buten-3-ylbenzyldiethylphosphonats zugetropft. Bei der exothermen Reaktion bildet sich aus der roten Lösung sofort ein farbloser Niederschlag. Nach 2-stündigen Rühren bei Raumtemperatur wird das Reaktionsgemisch noch 24 Stunden stehengelassen. Anschließend wird der Niederschlag abfiltriert und aus Ethanol umkristallisiert. Es werden 65 g leicht grünliche Kristalle mit einem Schmelzpunkt bei 214°C erhalten. Die Struktur wird durch das ¹H-NMR bestätigt.

Eine Lösung von 3.0 g des oben beschriebenen 4-Phenyl-4'-buten-3-ylstilbens und 1,1 g des in Beispiel 1 beschriebenen Octa(hydrogendimethylsiloxy)octasilsesquioxans in 21 ml wasserfreiem Toluol wird mit 0,08 ml der in Beispiel 1 beschriebenen 1%igen Lösung von Dicyclopentadienplatindichlorid in Dichlormethan versetzt und die so erhaltene Mischung 3 Stunden unter Rückfluß zum Sieden erhitzt. Das ausgefallene, farblose, sehr schwer lösliche Produkt wird abgesaugt, mit Tetrahydrofuran ausgerührt und bei 60°C und reduziertem Druck getrocknet. Die Ausbeute beträgt 3,5 g. Die unter UV-Licht stark fluoreszierende Substanz ist bis 248°C kristallin. Darüber besitzt sie eine smektisch-A Phase (in der die mechanische Orientierung erfolgt), die ab 286°C isotrope Anteile besitzt. Der Klärpunkt liegt über 300°C.

### Beispiel 8

Eine Lösung von 0,5 g 4,4'-Divinylbenzol (käuflich erhältlich bei der Aldrich-Chemie GmbH & Co. KG, D-7924 Steinheim), 5,0 g 10-Undecensäurechlolesterylester sowie 2,1 g des in Beispiel 1 beschriebenen Octa(hydrogendimethylsiloxy)octasilsesquioxans in 20 ml wasserfreiem Toluol wird mit 0,14 ml der in Beispiel 1 beschriebenen 1%igen Lösung von Dicyclopentadienplatindichlorid in Dichlormethan versetzt und die so erhaltene Mischung 3 Stunden unter Rückfluß zum Sieden erhitzt. Zur Abtrennung der platinhaltigen feinverteilten Niederschläge wird über eine kurze, mit Kieselgel gefüllte Säule abfiltriert. Anschließend wird das Lösungsmittel bei vermindertem Druck abdestilliert, das Rohprodukt in Tetrahydrofuran gelöst, mit Ethanol zwei Mal umgefällt und bei 60°C unter vermindertem Druck getrocknet. Es werden 5,2 g eines farblosen, nach GPC zu 100% reinen Produktes erhalten. Dieses Produkt bildet nach der Orientierung bei 70°C einen farblosen Film, der von Raumtemperatur bis zum Klärbereich zwischen 92 und 130°C eine nematische Phase aufweist. Der Glaspunkt liegt bei 20°C.

### Beispiel 9

Eine Lösung von 0,5 g 3,9-Divinyl-2,4,8,10-tetraoxaspiro(5.5)undecan (erhältlich bei der Aldrich-Chemie GmbH & Co. KG, D-7924 Steinheim) der Formel 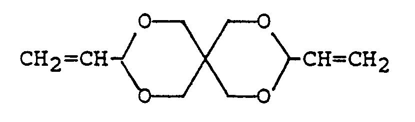
3,0 g 10-Undecensäurecholesterylester sowie 1,2 g des in Beispiel 1 beschriebenen Octa(hydrogendimethylsiloxy)octasilsesquioxans in 13 ml wasserfreiem Toluol wird mit 0,09 ml der in Beispiel 1 beschriebenen 1%igen Lösung von Dicyclopentadienplatindichlorid in Dichlormethan versetzt und die so erhaltene Mischung 90 Minuten auf 70°C erhitzt. Das dabei ausgefallene Produkt wird durch Zugabe von Tetrahydrofuran gelöst und die Lösung zur Abtrennung der platinhaltigen feinverteilten Niederschläge über eine kurze, mit Tonsil gefüllte Säule filtriert. Anschließend wird das Lösungsmittel abgezogen, der farblose, zähe Rückstand in Tetrahydrofuran aufgenommen und mit Ethanol ausgefällt. Diese Umfällung wird noch zwei Mal wiederholt. Nach dem Trocknen bei 90°C unter vermindertem Druck werden 3,2 g eines farblosen Feststoffs erhalten. Aus dem GPC geht hervor, daß neben Monomeren auch die Dimeren als Vernetzungsprodukt im Verhältnis 1 : 1 entstehen. Die Präparation und Orientierung der Probe bei 90°C ergibt einen klaren Film, der von Raumtemperatur bis 90°C eine smektisch-A Phase mit kristallinem Anteil, darüber bis zum Klärbereich zwischen 146 und 157°C eine reine smektisch-A Phase besitzt. Der Glaspunkt liegt bei 36°C.

### Beispiel 10

### Herstellung von Hexa(hydrogendimethylsiloxy)hexasilsesquioxan der Formel (HSi(CH₃)₂OSiO_{3/2})₆

412 g (400 ml) 40%ige wäßrige Tetraethylammoniumhydroxidlösung (käuflich erhältlich bei der Firma Fluka, D-7910 Neu-Ulm) wird mit 200 ml Wasser verdünnt und langsam mit 225 g Tetraethoxysilan versetzt. Anschließend läßt man 24 Stunden bei Raumtemperatur rühren. Man engt dann destillativ auf 45,2 % des ursprünglichen Gewichts ein und bringt die Lösung bei 4°C zur Kristallisation. 22 g dieses Tetraethylammoniumsilicats werden innerhalb von 20 Minuten zu einer auf 5°C gekühlten Mischung von 80 ml (60,6 g) 1,1,3,3-Tetramethyldisiloxan (erhältlich unter der Bezeichnung "HSi2" bei der Wacker-Chemie GmbH, D-8000 München), 80 ml (69,1 g) Dimethylchlorsilan (käuflich erhältlich unter der Bezeichnung "M2" bei der Wacker-Chemie GmbH, D-8000 München) und 160 ml Dimethylformamid gegeben. Die Temperatur steigt dabei von 5°C auf 15°C. Anschließend wird 1 Stunde bei 5°C gerührt. Dann wird mit 200 ml Eiswasser versetzt, die organische Phase mit Wasser neutral gewaschen, über Natriumsulfat getrocknet, filtriert und das Lösungsmittel bei 60°C/1500 Pa abdestilliert. Es bleibt eine klare, viskose Flüssigkeit zurück, aus der beim Abkühlen 1,63 g Kristalle ausfallen, die abfiltriert werden können.

Eine Lösung von 4,35 g 10-Undecansäurecholesterylester und 0,5 g des oben beschriebenen Hexa(hydrogendimethylsiloxy)hexasilsesquioxans in 13 ml wasserfreiem Toluol mit 0,09 ml der in Beispiel 1 beschriebenen 1%igen Lösung von Dicyclopentadienplatindichlorid in Dichlormethan versetzt und die so erhaltene Mischung 14 Stunden bei Raumtemperatur gerührt. Zur Abtrennung der platinhaltigen feinverteilten Niederschläge wird über eine kurze, mit Kieselgel gefüllte Säule abfiltriert. Anschließend wird das Lösungsmittel bei vermindertem Druck abdestilliert, das Rohprodukt in Tetrahydrofuran gelöst, mit Ethanol umgefällt und bei 60°C unter vermindertem Druck getrocknet. Erhalten werden 1,3 g eines farblosen, nach GPC 100% reinen Feststoffs. Die Probenpräparation ergibt durch mechanische Scherung ab 77°C einen transparenten Film, der von Raumtemperatur bis 37°C eine smektisch-A Phase mit kristallinem Anteil, darüber bis zum Klärbereich zwischen 136 und 148°C eine reine smektisch-A Phase aufweist. Der Glaspunkt liegt bei 30°C.

## Patentansprüche

1. Organosilsesquioxane mit mindestens einer mesogenen Seitengruppe.

2. Organosilsesquioxane gemäß Anspruch 1 der allgemeinen Formel
(R(SiR¹₂O)ₐSiO_{3/2})ₓ (I),
worin
x die Zahl 4, 6, 8, 10 oder 12 ist,
a gleich oder verschieden sein kann und eine ganze Zahl von 0 bis 10 ist,
R¹ gleiche oder verschiedene, einwertige organische Reste bedeutet und
R gleich oder verschieden sein kann und einen chiralen oder achiralen mesogenen Rest bedeutet, mit der Maßgabe, daß bis zu x-1 der Reste R auch die Bedeutung von R¹ haben können.

3. Organosilsesquioxane gemäß Anspruch 1 oder 2, dadurch gekennzeichnet, daß R einen Rest der Formel 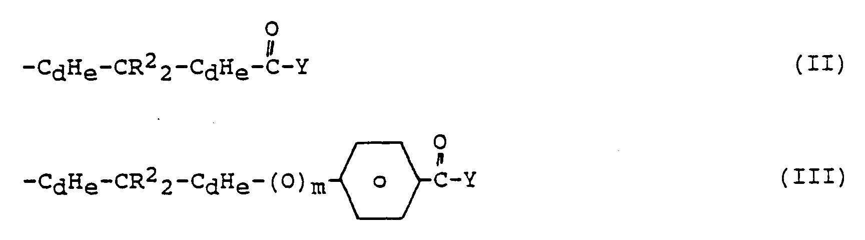
-C_{d}Hₑ-CR²₂-C_{d}Hₑ-(O)ₘ-Y (IV)
oder 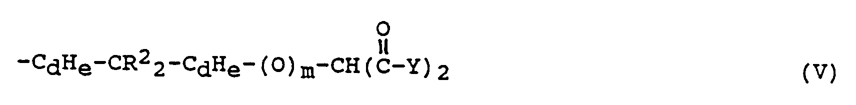 darstellt, wobei
R² gleich oder verschieden sein kann und Wasserstoffatom, Cyanogruppe, Hydroxylgruppe, Halogenatom und Alkylgruppe mit 1 bis 4 Kohlenstoffatomen bedeutet,
d jeweils gleiche oder verschiedene ganze Zahlen zwischen 0 und 12,
e jeweils gleiche oder verschiedene ganze Zahlen zwischen 0 und 24 bedeutet,
m 0 oder 1 ist und
Y Cholesterylrest sowie einen Rest der Formel (VI), (VIII), (IX) und (X)
bedeutet.

4. Organosilsesquioxane gemäß Anspruch 2 oder 3, dadurch gekennzeichnet, daß Y Cholesterylrest bedeutet.

5. Organosilsesquioxane gemäß einem oder mehreren der Ansprüche 3 bis 4, dadurch gekennzeichnet, daß Y einen Rest der allgemeinen Formel
-Pᵥ-(B_{f}-Eᵣ)_{c}-R⁴ (VI)
darstellt, worin
P gleich oder verschieden sein kann und Sauerstoffatom, Schwefelatom, -C_{d}Hₑ- mit d und e gleich eine der obengenannten Bedeutungen und N-Alkylaminorest bedeutet,
v gleich oder verschieden sein kann und eine ganze Zahl zwischen 0 und 12 bedeutet,
E gleich oder verschieden sein kann und -CH₂-CH₂-, -CHO-, -OCH₂-, -COS- sowie ein konjugiertes Mehrfachbindungssystem zwischen gleichen oder verschiedenen Atomen bedeutet,
r gleich oder verschieden sein kann und eine ganze Zahl zwischen 0 und 8 bedeutet,
c gleich oder verschieden sein kann und eine ganze Zahl zwischen 1 und 5 bedeutet,
f gleich oder verschieden sein kann und eine ganze Zahl zwischen 1 und 5 bedeutet,
R₄ gleich oder verschieden ist und Wasserstoffatom, Halogenatom, Hydroxylgruppe, Nitrogruppe, Aminogruppe und Cyanogruppe sowie chirale und achirale Kohlenwasserstoff-, Kohlenwasserstoffoxy-, Ester-, Acyl- und Acyloxyreste, die gegebenenfalls substituiert sein können, bedeutet und
B gleich oder verschieden sein kann und einen zweiwertigen, cyclischen Rest, ausgewählt aus der Gruppe der cyclischen Kohlenwasserstoffe und der Heterocyclen, mit der Maßgabe, daß diese Reste mit Halogenatom, Hydroxylgruppe, Nitrogruppe, Aminogruppe und Cyanogruppe sowie chiralen und achiralen Kohlenwasserstoff-, Kohlenwasserstoffoxy-, Ester-, Acyl- und Acyloxygruppen, die gegebenenfalls substituiert sein können, substituiert sein können,
bedeutet.

6. Organosilsesquioxane gemäß einem oder mehreren der Ansprüche 3 bis 5, dadurch gekennzeichnet, daß Y einen Rest der allgemeinen Formel 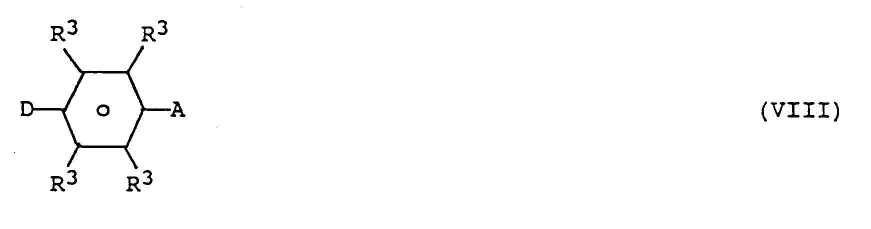 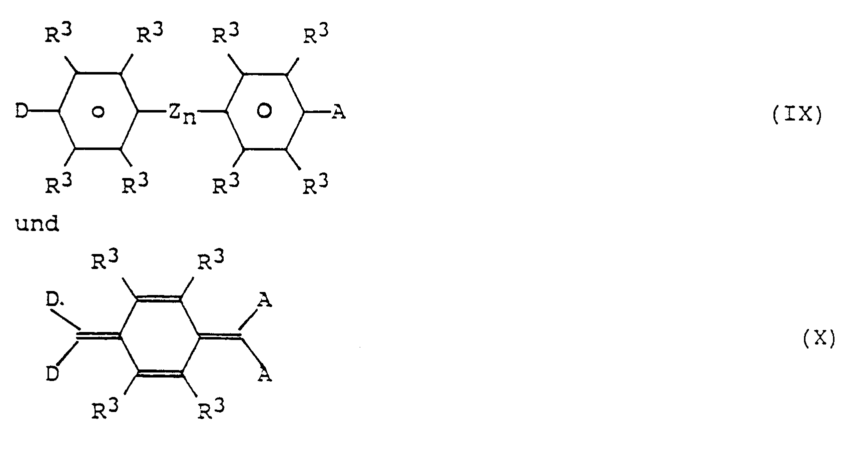 bedeutet, worin
R³ gleich oder verschieden sein kann und eine der Bedeutungen von R⁴ hat,
A gleich oder verschieden sein kann und elektronenziehender Rest bedeutet,
D gleich oder verschieden sein kann und elektronenschiebender Rest bedeutet,
Z ein konjugiertes Mehrfachbindungssystem zwischen gleichen oder verschiedenen Atomen bedeutet und
n eine ganze Zahl zwischen 0 und 8 ist,
mit der Maßgabe, daß in den Resten Y der allgemeinen Formeln (VIII) bis (X) ein Wasserstoffatom durch eine chemische Bindung ersetzt ist.

7. Verfahren zur Herstellung von Organosilsesquioxanen gemäß einem oder mehreren der Ansprüche 1 bis 6, dadurch gekennzeichnet, daß Organosilsesquioxane mit mindestens einem Si-gebundenen Wasserstoffatom mit chiralen oder achiralen, mesogenen Verbindungen, die eine aliphatische Mehrfachbindung aufweisen, umgesetzt werden.

8. Verfahren gemäß Anspruch 7, dadurch gekennzeichnet, daß man als Organosilsesquioxane mit mindestens einem Sigebundenen Wasserstoffatom solche der Formel
(R_{1-b}H_{b}(SiR¹₂O)ₐSiO_{3/2})ₓ (XI)
einsetzt, wobei R, R¹, a und x eine der oben angegebenen Bedeutungen haben und b gleich oder verschieden sein kann und 0 oder 1 bedeutet, mit der Maßgabe, daß das Organosilsesquioxan der Formel (XI) mindestens ein Sigebundenes Wasserstoffatom aufweist und die Reste R eine der Bedeutungen von R¹ haben.

9. Verfahren gemäß Anspruch 7 oder 8, dadurch gekennzeichnet, daß als chirale oder achirale, mesogene Verbindungen, die eine aliphatische Mehrfachbindung aufweisen, solche der Formeln 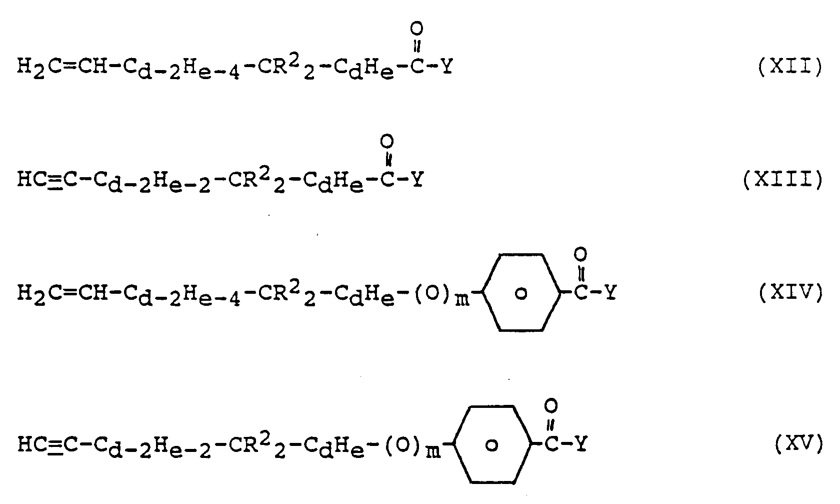
H₂C=CH-C_{d-2}Hₑ₋₄-CR²₂-C_{d}Hₑ-(O)ₘ-Y (XVI)
HC≡C-C_{d-2}Hₑ₋₂-CR²₂-C_{d}Hₑ-(O)ₘ-Y (XVII) 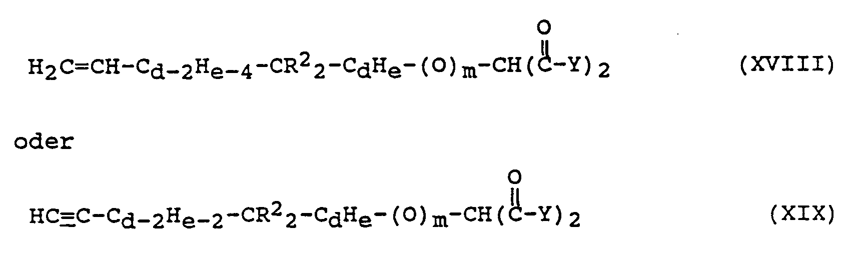
eingesetzt werden, wobei
R², d, e, m und Y eine der obengenannten Bedeutungen haben.

10. Verfahren gemäß einem oder mehreren der Ansprüche 7 bis 9, dadurch gekennzeichnet, daß die Umsetzung in Anwesenheit von Katalysator durchgeführt wird.

## Claims

1. Organosilsesquioxane having at least one mesogenic side group.

2. Organosilsesquioxane according to Claim 1 of the general formula
(R(SiR¹₂O)ₐSiO_{3/2})ₓ (I),
in which x is the number 4, 6, 8, 10 or 12, a can be identical or different and is an integer from 0 to 10, R¹ denotes identical or different monovalent organic radicals and R can be identical or different and denotes a chiral or achiral mesogenic radical, with the proviso that up to x-1 of the radicals R can also have the meaning of R¹.

3. Organosilsesquioxane according to Claim 1 or 2, characterized in that R represents a radical of the formula 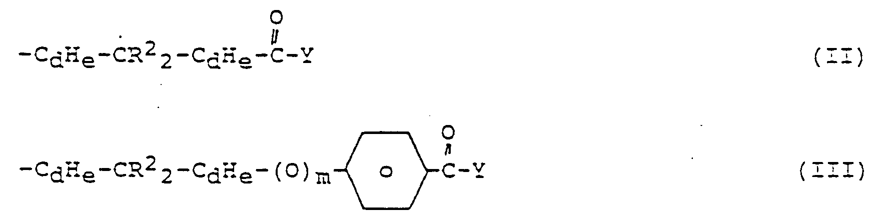
-C_{d}Hₑ-CR²₂-C_{d}Hₑ-(O)ₘ-Y (IV)
or 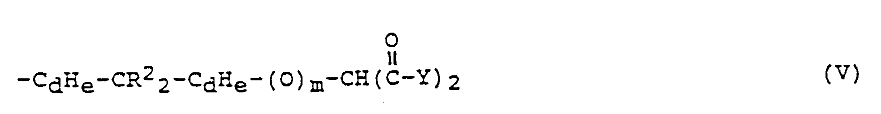 in which R² can be identical or different and denotes a hydrogen atom, cyano group, hydroxyl group, halogen atom or alkyl group having 1 to 4 carbon atoms, d denotes in each case identical or different integers between 0 and 12, e denotes in each case identical or different integers between 0 and 24, m is 0 or 1 and Y denotes the cholesteryl radical or a radical of the formula (VI), (VIII), (IX) or (X).

4. Organosilsesquioxane according to Claim 2 or 3, characterized in that Y denotes the cholesteryl radical.

5. Organosilsesquioxane according to any of Claims 3 to 4, characterized in that Y represents a radical of the general formula
-Pᵥ-(B_{f}-Eᵣ)_{c}-R⁴ (VI)
in which P can be identical or different and denotes an oxygen atom, a sulphur atom, -C_{d}Hₑ-, where d and e have one of the abovementioned meanings, or an N-alkylamino radical, v can be identical or different and denotes an integer between 0 and 12, E can be identical or different and denotes -CH₂-CH₂-, -CHO-, -OCH₂-, -COS- or a conjugated multiple bond system between identical or different atoms, r can be identical or different and denotes an integer between 0 and 8, c can be identical or different and denotes an integer between 1 and 5, f can be identical or different and denotes an integer between 1 and 5, R⁴ is identical or different and denotes a hydrogen atom, halogen atom, hydroxyl group, nitro group, amino group or cyano group or chiral or achiral hydrocarbon, hydrocarbonoxy, ester, acyl or acyloxy radicals, which can optionally be substituted, and B can be identical or different and denotes a divalent cyclic radical chosen from the group comprising cyclic hydrocarbons and heterocyclic radicals, with the proviso that these radicals can be substituted by a halogen atom, hydroxyl group, nitro group, amino group or cyano group or by chiral or achiral hydrocarbon, hydrocarbonoxy, ester, acyl or acyloxy groups, which can optionally be substituted.

6. Organosilsesquioxane according to any of Claims 3 to 5, characterized in that Y denotes a radical of the general formula 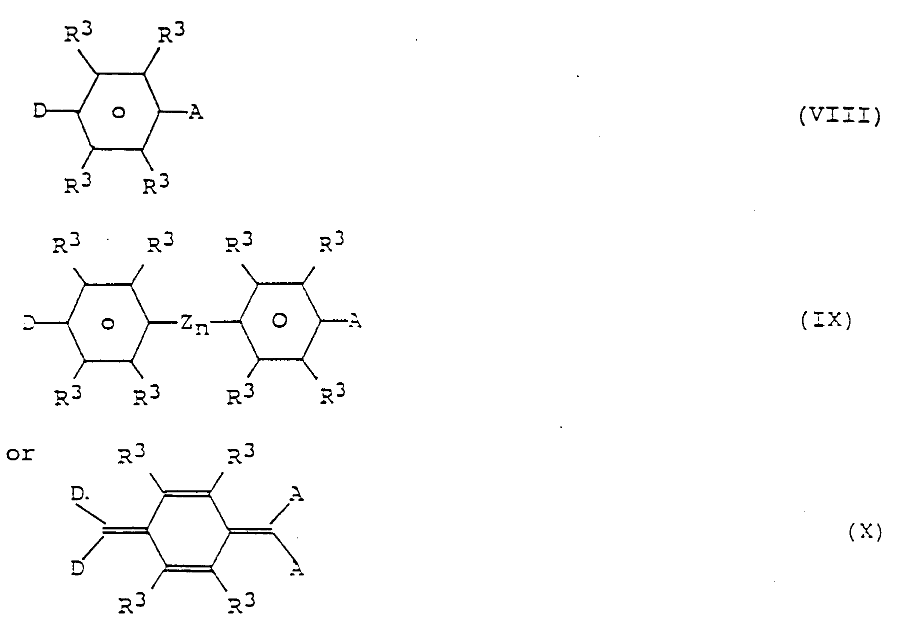 in which R³ can be identical or different and has one of the meanings of R⁴, A can be identical or different and denotes an electron-attracting radical, D can be identical or different and denotes an electron-repelling radical, Z denotes a conjugated multiple bond system between identical or different atoms, and n is an integer between 0 and 8, with the proviso that one hydrogen atom in the radicals Y of the general formulae (VIII) to (X) is replaced by a chemical bond.

7. Process for the preparation of an organosilsesquioxane according to any of Claims 1 to 6, characterized in that an organosilsesquioxane having at least one Si-bonded hydrogen atom is reacted with a chiral or achiral mesogenic compound which contains an aliphatic multiple bond.

8. Process according to Claim 7, characterized in that the organosilsesquioxane which is employed and has at least one Si-bonded hydrogen atom is one of the formula in which R, R¹, a and x have one of the
(R_{1-b}H_{b}(SiR¹₂O)ₐSiO_{3/2})ₓ (XI)
abovementioned meanings and b can be identical or different and denotes 0 or 1, with the proviso that the organosilsesquioxane of the formula (XI) contains at least one Si-bonded hydrogen atom and the radicals R have one of the meanings of R¹.

9. Process according to Claim 7 or 8, characterized in that the chiral or achiral mesogenic compound which contains an aliphatic multiple bond employed is one of the formulae 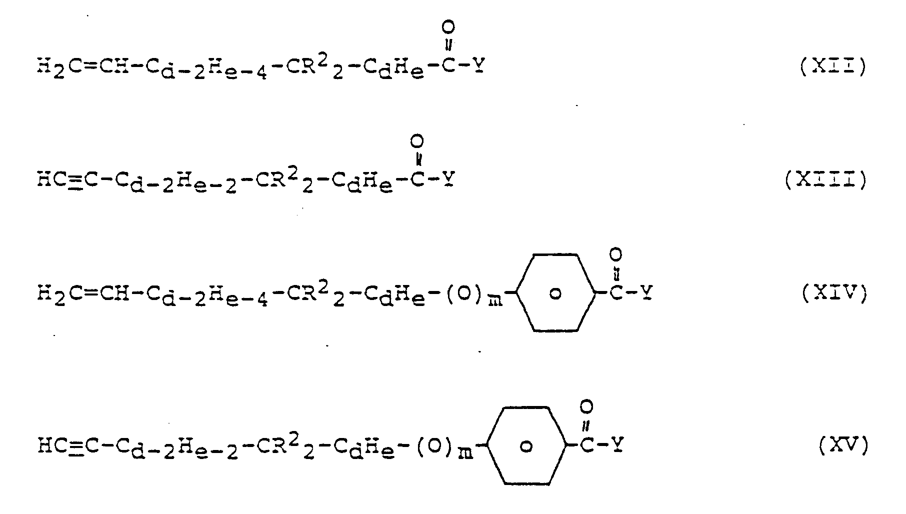
H₂C=CH-C_{d-2}Hₑ₋₄-CR²₂-C_{d}Hₑ-(O)ₘ-Y (XVI)
HC≡C-C_{d-2}Hₑ₋₂-CR²₂-C_{d}Hₑ-(O)ₘ-Y (XVII) 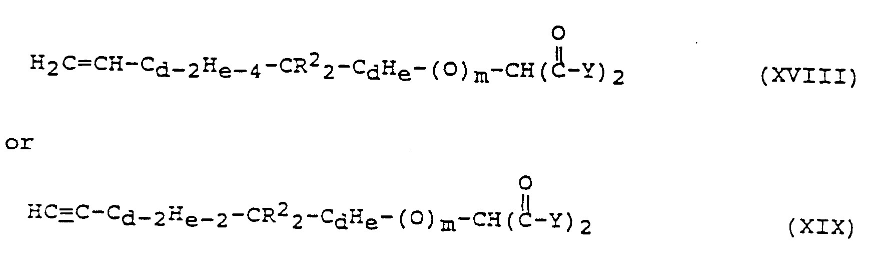
in which R², d, e, m and Y have one of the abovementioned meanings.

10. Process according to one or more of Claims 7 to 9, characterized in that the reaction is carried out in the presence of a catalyst.

## Revendications

1. Organosilsesquioxanes avec au moins un groupe mésogène latéral.

2. Organosilsesquioxanes selon la revendication 1, de formule générale :
(R(SiR¹₂O)ₐSiO_{3/2})ₓ (I)
où
x représente les nombres 4, 6, 8, 10 ou 12,
a peut être identique ou différent et représenter être un nombre entier de 0 à 10,
R¹ repré sente des radicaux organiques monovalents identiques ou différents, et
R peut être identique ou différent et représente un radical mésogène chiral ou achiral, à la condition que jusqu'à une valeur (x-1) du radical R, il peuvent aussi avoir la signification de R¹.

3. Organosilsesquioxanes selon la revendication 1 ou 2, caractérisés en ce que R représente un radical de formule : 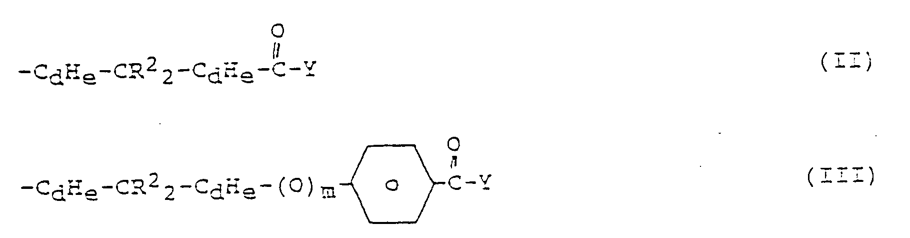
-C_{d}Hₑ-CR²₂-C_{d}Hₑ-(O)ₘ-Y (IV)
ou 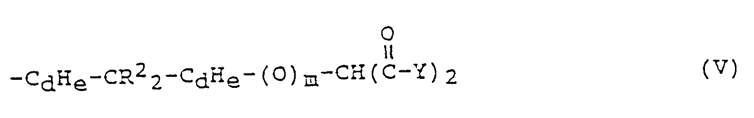 où
R² peut être identique ou différent et représente un atome d'hydrogène, les groupes cyano, hydroxyle, un atome d'halogène et un groupe alkyle avec 1 à 4 atomes de carbone,
d représente chaque fois des nombres entiers identiques ou différents compris entre 0 et 12,
e représente chaque fois des nombres entiers identiques ou différents compris entre 0 et 24,
m vaut 0 ou 1, et
Y représente un radical d'ester de cholestéryle ainsi qu'un radical de formule (VI), (VIII), (IX) et (X).

4. Organosilsesquioxanes selon la revendication 2 ou 3, caractérisés en ce que Y représente un radical de cholestéryle.

5. Organosilsesquioxanes selon une ou plusieurs des revendications 3 à 4, caractérisés en ce que Y représente un radical de formule générale :
-Pᵥ-(B_{f}-Eᵣ)_{c}-R⁴ (VI)
où
P peut être identique ou différent et représente un atome d'oxygène, un atome de soufre, -C_{d}Hₑ- avec d et e identiques à l'une des significations précitées et un radical N-alkylamino,
v peut être identique ou différent et représente un nombre entier compris entre 0 et 12,
E peuve être identique ou différent et représente -CH₂-CH₂-, -CHO-, -OCH₂-, -COS- ainsi qu'un système conjugué à liaisons multiples entre les atomes identiques ou différents
r peut être identique ou différent et représente un nombre entier compris entre 0 et 8,
c peut être identique ou différent et représente un nombre entier compris entre 1 et 5,
f peut être identique ou différent et représente un nombre entier compris entre 1 et 5,
R⁴ peut être identique ou différent et représente un atome d'hydrogène, un atome d'halogène, un groupe hydroxyle, un groupe nitro, un groupe amino et un groupe cyano ainsi que des radicaux chiraux et achiraux hydrocarbones_{,} hydrocarbone-oxy, des radicaux ester, acyle et acyloxy qui peuvent être éventuellement substitués, et
B peut être identique ou différent et représente un radical bivalent cyclique pris dans le groupe qui comporte des hydrocarbones cycliques et des hétérocycles, à la condition que ces radicaux puissent être des hétérocyles substitués par des atomes d'halogènes, des groupes hydroxyle, nitro, amino et cyano ainsi que des groupes chiraux et achiraux hydrocarbones, hydrocarbon-oxy, des radicaux ester, acyle et acyloxy, qui peuvent éventuellement être substitués.

6. Organosilsesquioxanes selon une ou plusieurs des revendications 3 à 5, caractérisés en ce que Y représente un radical de formule générale : 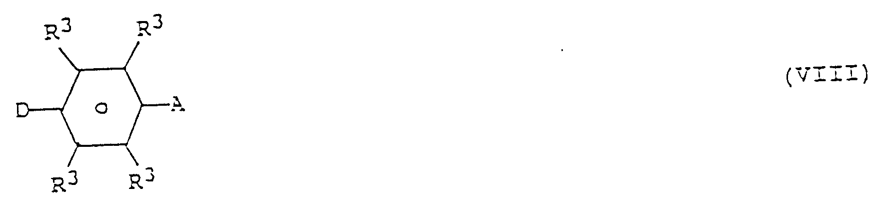 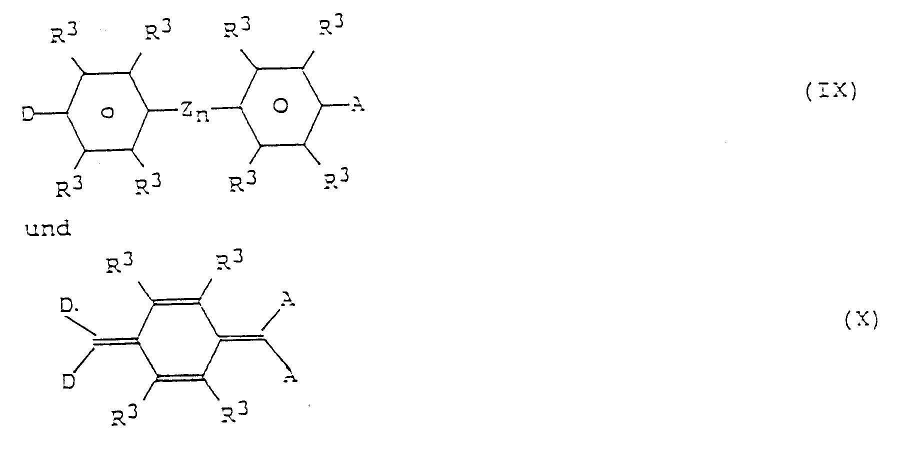 où
R³ peut être identique ou différent et avoir l'une des significations de R⁴,
A peut être identique ou différent et représente un radical accepteur d'électrons,
D peut être identique ou différent et représente un radical donneur d'électrons,
Z représente un système conjugué à liaisons multiples entre atomes identiques et différents,
n représente un nombre entier compris entre 0 et 8,
à la condition que dans les radicaux Y, dans les formules (VIII) à (X), un atome d'hydrogène soit remplacé par une liaison chimique.

7. Procédé pour la préparation d'organosilsesquioxanes selon une ou plusieurs des revendications 1 à 6, caractérisé en ce qu'on fait réagir les organosilsesquioxanes avec au moins un atome d'hydrogène lié à Si avec des composés mésogènes chiraux ou achiraux qui présentent une liaison multiple aliphatique.

8. Procédé selon la revendication 7, caractérisé en ce qu'on utilise en tant qu'organosilsesquioxanes avec au moins un atome d'hydrogène lié à Si ceux qui répondent à la formule :
(R_{1-b}H_{b}(SiR¹₂O)ₐSiO_{3/2})ₓ (XI)
R, R¹, a et x ayant les significations données ci-dessus et b peuvent être identiques ou différents et représenter 0 ou 1, à la condition que l'organosilsesquioxane de formule (XI) présente au moins un atome d'hydrogène lié à Si et les radicaux R ont l'une des significations de R¹.

9. Procédé selon la revendication 7 ou 8, caractérisé en ce que l'on utilise des composés mésogènes chiraux ou achiraux qui présentent une liaison aliphatique multiple et qui répondent aux formules : 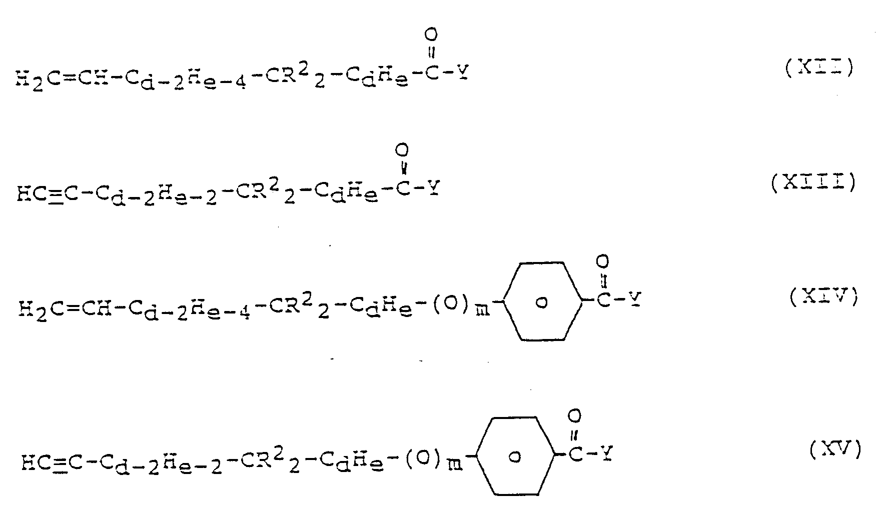
H₂C=CH-C_{d-2}Hₑ₋₄-CR²₂-C_{d}Hₑ-(O)ₘ-Y (XVI)
HC≡C-C_{d-2}Hₑ₋₂-CR²₂-C_{d}Hₑ-(O)ₘ-Y (XVII) 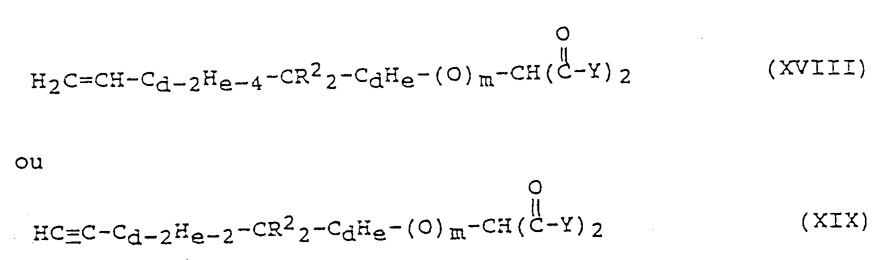
R², d, e, m et Y ayant les significations données ci-dessus.

10. Procédé selon une ou plusieurs des revendications 7 à 9, caractérisé en ce qu'on effectue la réaction en présence d'un catalyseur.
